# EUROPEAN PATENT APPLICATION

(11) **EP 4 458 239 A1**
(43) Date of publication of application: **06.11.2024**
(21) Application number: 22913366.5
(22) Date of filing: 02.08.2022
(51) Int. Cl.: A47L 11/40, A47L 11/24

(54) **SELF-CLEANING DUST COLLECTION BASE AND DUST COLLECTION SYSTEM**

(30) Priority: 31.12.2021 CN 202111676014
(71) Applicant: Beijing Roborock Technology Co., Ltd., Beijing 102206 (CN)
(72) Inventor: ZHOU, Yongfei, Beijing 102206 (CN); LI, Zanguang, Beijing 102206 (CN); CHENG, Pan, Beijing 102206 (CN)
(74) Representative: Studio Torta S.p.A.
(86) International application number: PCT/CN2022/109775
(87) International publication number: WO 2023/124080

(57) **Abstract**

A self-cleaning dust collection seat and a dust collection system are provided. The self-cleaning dust collection seat includes a bottom plate (1000) of the self-cleaning dust collection seat and a body (2000) of the self-cleaning dust collection seat, the bottom plate (1000) being connected to the body (2000); the bottom plate (1000) includes a body base (6000), a dust collection opening (6100), and a lifting structure (1300), the lifting structure (1300) being disposed on the upper surface of the bottom plate (1000), and configured to, during a process of an automatic cleaning device moving to the bottom plate (1000) along a first direction (X), press a cleaning module on the bottom surface of the automatic cleaning device, so that the cleaning module moves towards the interior of the automatic cleaning device.

## Description

### CROSS REFERENCE TO RELATED APPLICATIONS

This application claims priority to Chinese Patent Application No. 202111676014.1 filed on December 31, 2021, which is incorporated herein by reference in its entirety as a part of the present application.

### TECHNICAL FIELD

The present disclosure relates to the field of cleaning robot technology, in particular to a self-cleaning dust collection seat and a dust collection system.

### BACKGROUND

An automatic cleaning apparatus, for example, a sweeping robot, when returning to a self-cleaning dust collection seat after completing cleaning, moves in a specific direction from an inclined plane of a bottom plate to the bottom plate of the self-cleaning dust collection seat. This process is generally known as entering a station, and an opposite process is referred to as leaving a station.

In the process of the automatic cleaning apparatus entering or leaving the station, the bottom of the automatic cleaning apparatus and the bottom plate of the self-cleaning dust collection seat often rub against each other or even get stuck, which will not only prevent the automatic cleaning apparatus from entering or leaving the station smoothly, but also affect the service life of the automatic cleaning apparatus.

### SUMMARY

An objective of the present disclosure is to provide a self-cleaning dust collection seat and a dust collection system, which can solve a rubbing problem of an automatic cleaning apparatus during entering and leaving a station. The specific solutions are as follows.

An objective of the present disclosure is to provide a self-cleaning dust collection seat, including: a bottom plate of the self-cleaning dust collection seat and a body of the self-cleaning dust collection seat, wherein the bottom plate of the self-cleaning dust collection seat is connected to the body of the self-cleaning dust collection seat, a body base is included below the body of the self-cleaning dust collection seat, and is connected to the bottom plate, and wherein the body base and the bottom plate are, after being connected, configured to support an automatic cleaning apparatus when the automatic cleaning apparatus returns to the self-cleaning dust collection seat; a dust collection opening substantially located at an edge of a joint between the body base and the bottom plate; and a lifting structure disposed on an upper surface of the bottom plate and substantially located at the edge of the joint between the body base and the bottom plate, wherein the lifting structure is configured to press a cleaning module located on a bottom surface of the automatic cleaning apparatus in a process of the automatic cleaning apparatus moving backward in a first direction to the bottom plate of the self-cleaning dust collection seat, such that the cleaning module moves toward an interior of the automatic cleaning apparatus.

An objective of the present disclosure is to provide a dust collection system, including an automatic cleaning apparatus and the self-cleaning dust collection seat as described in any of the above.

An objective of the present disclosure is to provide a self-cleaning dust collection seat, including a body of the self-cleaning dust collection seat, wherein the body of the self-cleaning dust collection seat is configured to at least partially support an automatic cleaning apparatus when the automatic cleaning apparatus returns to the self-cleaning dust collection seat; and the self-cleaning dust collection seat further includes: a dust collection opening configured to be docked with a dust outlet of the automatic cleaning apparatus when the automatic cleaning apparatus returns to the self-cleaning dust collection seat for a dust collection operation; and a lifting structure substantially located in a direction close to the dust collection opening and away from the body of the self-cleaning dust collection seat, wherein the lifting structure is configured to press a cleaning module located on a bottom surface of the automatic cleaning apparatus in a process of the automatic cleaning apparatus moving backward in a first direction to the self-cleaning dust collection seat, such that the cleaning module moves toward an interior of the automatic cleaning apparatus.

### BRIEF DESCRIPTION OF THE DRAWINGS

The drawings here, which are incorporated in the description and constitute a part of the description, show embodiments conforming to the present disclosure, and are used to explain the principles of the present disclosure together with the description. Apparently, the drawings in the following show merely some embodiments of the present disclosure, and those of ordinary skills in the art can also derive other drawings from these drawings without creative efforts. In the drawings:
FIG. 1 is a schematic diagram of an overall structure of a self-cleaning dust collection seat according to some embodiments of the present disclosure;
FIG. 2 is a schematic structural diagram of a body of a self-cleaning dust collection seat according to some embodiments of the present disclosure;
FIG. 3 is a schematic structural diagram of a water storage tank in a self-cleaning dust collection seat according to some embodiments of the present disclosure;
FIG. 4 is a side view of a water storage tank in a self-cleaning dust collection seat according to some embodiments of the present disclosure;
FIG. 5 is a schematic diagram of an inner structure of a water storage tank in a self-cleaning dust collection seat according to some embodiments of the present disclosure;
FIG. 6 is a structural diagram of a cross section of a dust collection bin according to some embodiments of the present disclosure;
FIG. 7 is a diagram of an assembled structure of a top surface of a fan in a dust collection bin according to some embodiments of the present disclosure;
FIG. 8 is a structural diagram of a shock-absorbing hood of a dust collection bin according to some embodiments of the present disclosure;
FIG. 9 is a diagram of an assembled structure of a bottom surface of a fan in a dust collection bin according to some embodiments of the present disclosure;
FIG. 10 is a structural diagram of a shock-absorbing cushion of a dust collection bin according to some embodiments of the present disclosure;
FIG. 11 is a front view of a bottom plate of a self-cleaning dust collection seat according to some embodiments of the present disclosure;
FIG. 12 is a side view of a bottom plate of a self-cleaning dust collection seat according to some embodiments of the present disclosure;
FIG. 13 is a three-dimensional structural diagram of a bottom plate of a self-cleaning dust collection seat according to some embodiments of the present disclosure;
FIG. 14 is a diagram of an overall structure of a self-cleaning dust collection seat and a dust box according to some embodiments of the present disclosure;
FIG. 15 is a sectional view of a wind duct of a self-cleaning dust collection seat according to some embodiments of the present disclosure; and
FIG. 16 is a schematic diagram of an airflow direction in a self-cleaning dust collection seat in a dust collection state according to some embodiments of the present disclosure.

### List of Reference Numerals:

bottom plate 1000 of self-cleaning dust collection seat, body 2000 of self-cleaning dust collection seat, water storage chamber 2700, dust collection chamber 2100, dust collection bin 3000, sewage chamber 2300, clean water chamber 2400, boss 2600, air pump opening 2610, sewage tank connection opening 2620, clean water tank connection opening 2630, dust collection hood 2800, clean water tank 4000, sewage tank 5000, wind duct 2500, drain hole 2101, wind duct 2500, wind inlet 2102, drain valve 2103, fixed end 21031, elastic movable end 21032, water blocking structure 2104, first blocking wall 21041, second blocking wall 21042, fan compartment 2200, fan channel 2210, fan 2220, shock-absorbing device 2230, air inlet 2240, exhaust vent 2250, shock-absorbing hood 2231, top surface 22311 of shock-absorbing hood, first opening 22312, protruding edge 22313, first protrusion 22314, second protrusion 22315, third protrusion 22316, groove 22317, side wall 22318 of shock-absorbing hood, first protruding beam 22319, shock-absorbing cushion 2232, second opening 22322, second protruding beam 22321, third protruding beam 22323, assembled protrusion 22324, bottom plate body 1100, recessed portion 1121, raised portion 1122, anti-skid structure 1123, lifting structure 1300, wedged-shape component 1310, first inclined surface 1311, first top surface 1313, second inclined surface 1312, roller 1320, beveled body 1400, body 2000 of self-cleaning dust collection seat, dust collection hood 2800, dust collection bin 3000, clean water tank 4000, sewage tank 5000, body base 6000, dust collection opening 6100, washing bin 6200, body wind duct 2510, base wind duct 2520, water storage chamber 2700, dust collection hood 2800, dust collection bin 3000, clean water tank 4000, sewage tank 5000, body base 6000, dust collection opening 6100, washing bin 6200, dust box 300, dust inlet 310, and wind inlet 320.

### DETAILED DESCRIPTION

To make the objectives, technical solutions and advantages of the present disclosure clearer, the present disclosure will be further described in detail below with reference to the drawings. It is obvious that the described embodiments are only some, but not all of the embodiments of the present disclosure. All other embodiments obtained by those of ordinary skill in the art without creative efforts based on the embodiments in the present disclosure are within the protection scope of the present disclosure.

The terms used in the embodiments of the present disclosure are for the purpose of describing particular embodiments only, and are not intended to limit the present disclosure. The singular forms "a/an", "said" and "the" used in the embodiments of the present disclosure and the appended claims are intended to include the plural forms as well, unless otherwise clearly indicated in the context. The term "a plurality of" generally means at least two.

It should be understood that the term "and/or" as used herein only describe an association relationship between associated objects, and indicate that there may be three kinds of relationships. For example, A and/or B may indicate three cases: A exists alone, both A and B exist, and B exists alone. In addition, the character "/" herein generally indicates an "or" relationship between the contextual objects.

It should be understood that, although the terms first, second, third, and the like may be used for descriptions in the embodiments of the present disclosure, these descriptions should not be limited to these terms. These terms are only used for a distinguishing purpose. For example, without departing from the scope of the embodiments of the present disclosure, "first" may also be referred to as "second", and similarly, "second" may also be referred to as "first".

It should also be noted that the terms "include", "contain", or any other variants thereof are intended to cover the nonexclusive inclusion, such that a commodity or device including a series of elements includes not only these elements, but also other elements not listed explicitly or elements inherent to such a commodity or device. Without more limitations, the element defined by the phrase "including a ..." does not exclude the existence of other same elements in the commodity or device including this element.

Embodiments of the present disclosure are described below in details with reference to the drawings.

In the related art, the structure of a self-cleaning dust collection seat is often more complex. A water tank is disposed in a complex cover cap of the self-cleaning dust collection seat, leading to inconvenience in removal, placement and use. A connection opening of the water tank is formed at the bottom of the water tank, and thus water in the water tank is prone to overflow, which may very possibly damage devices in the self-cleaning dust collection seat. In addition, a wind duct of the self-cleaning dust collection seat is also too complex, which is not convenient for debris to enter a dust collection bin from a dust box.

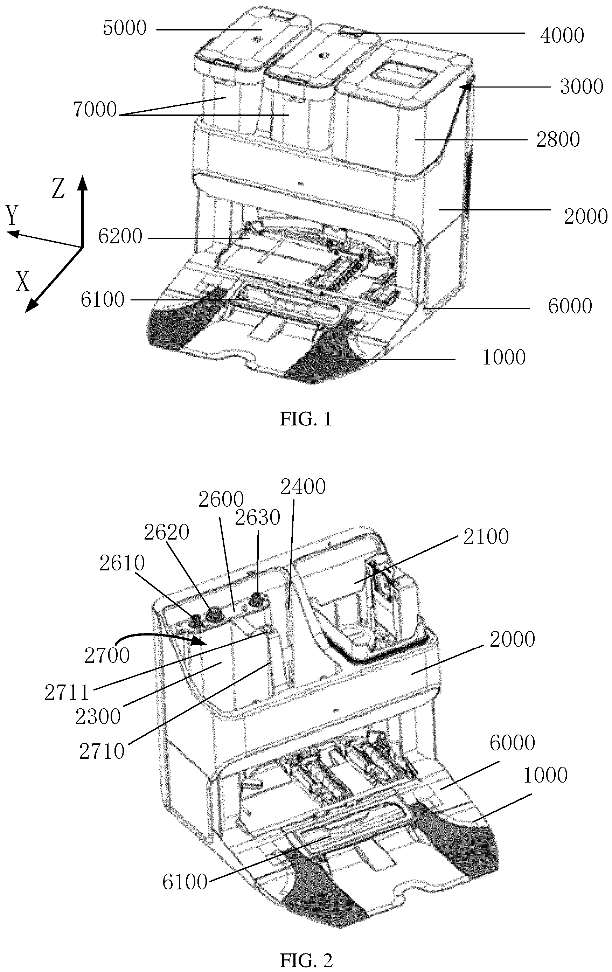

To this end, embodiments of the present disclosure provide a self-cleaning dust collection seat, and a water tank and a dust collection hood are exposed on an outer side of a body of the self-cleaning dust collection seat, so as to facilitate the mounting and use by a user. Meanwhile, a water opening is formed at the top of the body of the self-cleaning dust collection seat, such that the water is not prone to overflow from the water tank. A wind duct is directly disposed on a side wall of the body of the self-cleaning dust collection seat, which reduces the path of the wind duct and improves the dust collection efficiency. In some embodiments, the self-cleaning dust collection seat provided by the embodiments of the present disclosure is used as an example. FIG. 1 exemplarily shows a schematic diagram of an overall structure of a self-cleaning dust collection seat. FIG. 2 exemplarily shows a schematic structural diagram of a body of a self-cleaning dust collection seat according to the present disclosure, with a sewage tank, a clean water tank and a dust collection hood removed.

For clearer description of the operations of the self-cleaning dust collection seat, directions are defined as follows: the self-cleaning dust collection seat can be calibrated by the following three mutually perpendicular axes as defined: a transverse axis Y, a front and rear axis X, and a central vertical axis Z. The direction opposite an arrow direction of the front and rear axis X, i.e., a direction in which an automatic cleaning apparatus enters the self-cleaning dust collection seat, is marked as a "rearward direction", and the direction along the arrow direction of the front and rear axis X, i.e., a direction in which the automatic cleaning apparatus leaves the self-cleaning dust collection seat, is marked as a "forward direction". The transverse axis Y is essentially in a direction of the width of the body of the self-cleaning dust collection seat. The vertical axis Z is an upward extending direction from the bottom surface of the self-cleaning dust collection seat.

As shown in FIG. 1, a direction in which a bottom plate of the self-cleaning dust collection seat protrudes from the body of the self-cleaning dust collection seat is the forward direction, and a direction along a rear wall of the body of the self-cleaning dust collection seat is the rearward direction. A dust collection bin is located on the left side of the self-cleaning dust collection seat, a clean water tank 4000 is located on the right side of the dust collection bin 3000, and a sewage tank 5000 is located on the right side of the clean water tank 4000.

As shown in FIG. 1, the self-cleaning dust collection seat provided in embodiments of the present disclosure includes the bottom plate 1000 of the self-cleaning dust collection seat, the body 2000 of the self-cleaning dust collection seat, as well as the dust collection bin 3000, the clean water tank 4000 and the sewage tank 5000 which are disposed side by side on the body 2000 of the self-cleaning dust collection seat. Here, the bottom plate 1000 of the self-cleaning dust collection seat and the body 2000 of the self-cleaning dust collection seat are connected in a detachable or non-detachable manner, facilitating the transportation and repair of the bottom plate 1000 of the self-cleaning dust collection seat and the body 2000 of the self-cleaning dust collection seat. As shown in FIG. 2, the body 2000 of the self-cleaning dust collection seat includes a water storage chamber 2700, a dust collection chamber 2100 and a wind duct 2500. The water storage chamber 2700 is disposed at the top of the body 2000 of the self-cleaning dust collection seat, with an opening facing upward and forward, and includes a clean water chamber 2400 for accommodating the clean water tank 4000, and a sewage chamber 2300 for accommodating the sewage tank 5000. The dust collection chamber 2100 and the water storage chamber are disposed side by side at the top of the body 2000 of the self-cleaning dust collection seat, with an opening of the dust collection chamber 2100 facing upward and forward. The dust collection chamber 2100 forms the dust collection bin 3000 for accommodating a dust collection hood 2800. The upward and forward design of both the water storage chamber 2700 and the dust collection chamber 2100 facilitates the mounting and removal of the sewage tank 5000, the clean water tank 4000 and the dust collection hood 2800. Because all of the sewage tank 5000, the clean water tank 4000 and the dust collection hood 2800 are generally assembled to the body 2000 of the self-cleaning dust collection seat in a direction from a front side and an upper side, such a structural design is in line with the user's using habits. Furthermore, the upward and forward design facilitates the routine maintenance of devices in the water storage chamber 2700 and the dust collection chamber 2100.

The body 2000 of the self-cleaning dust collection seat further includes the wind duct 2500, which is at least partially disposed on a side wall of the body 2000 of the self-cleaning dust collection seat. A body base 6000 at the bottom of the body 2000 of the self-cleaning dust collection seat is communicated with the dust collection chamber 2100 through the wind duct 2500. In a dust collection process, garbage in the dust box enters the wind duct 2500 through a dust collection opening of the body base 6000, and then enters the dust collection chamber 2100 through the wind duct 2500. The body 2000 of the self-cleaning dust collection seat 2000 is configured to collect garbage from the dust box of the automatic cleaning apparatus. The body base 6000 of the self-cleaning dust collection seat includes a dust collection opening 6100 configured to be docked with a dust outlet of the automatic cleaning apparatus, and the garbage in the dust box of the automatic cleaning apparatus enters the dust collection bin 3000 of the body 2000 of the self-cleaning dust collection seat through the dust collection opening 6100. A sealing rubber gasket is further disposed around the dust collection opening 6100, and is used for sealing after the dust collection opening 6100 is docked with the dust outlet of the automatic cleaning apparatus, thereby ensuring a dust collection effect while preventing garbage leakage.

As shown in FIG. 2, the water storage chamber 2700 and the dust collection chamber 2100 are formed by the rear wall, the front wall and a plurality of side walls of the body 2000 of the self-cleaning dust collection seat in a surrounding manner. The water storage chamber 2700 and the dust collection chamber 2100 have coplanar rear walls and coplanar front walls and have one coplanar side wall. Here, the height of the rear wall of the body 2000 of the self-cleaning dust collection seat is greater than the height of the front wall of the body 2000 of the self-cleaning dust collection seat, the side walls of the body 2000 of the self-cleaning dust collection seat are connected to the rear wall and the front wall, and the end surfaces of the side walls of the body 2000 of the self-cleaning dust collection seat are arc-shaped structures. The upward and forward design of both the water storage chamber 2700 and the dust collection chamber 2100 facilitates the mounting and removal of the sewage tank 5000, the clean water tank 4000 and the dust collection hood 2800. The arc-shaped structure ensures the stability and aesthetics of the sewage tank 5000, the clean water tank 4000, and the dust collection hood 2800 that are mounted in the water storage chamber 2700 and in the dust collection chamber 2100.

The water storage chamber 2700 is configured to accommodate the sewage tank 5000 and the clean water tank 4000. A boss 2600 attached to the rear wall of the water storage chamber 2700 and extending upwards along the bottom of the water storage chamber 2700 to a position slightly lower than a height of the rear wall of the water storage chamber is included in the water storage chamber 2700. The top of the boss is provided with a plurality of soft rubber protruding openings, which are configured to be connected to the sewage tank 5000 or the clean water tank 4000 assembled at corresponding positions. Here, a vertically extending partition plate 2710 is included in the water storage chamber 2700, and divides the water storage chamber 2700 into two parts, with one part serving as the sewage chamber 2300 for accommodating the sewage tank 5000, and the other part serving as the clean water chamber 2400 for accommodating the clean water tank 4000.

In some embodiments, the soft rubber protruding openings include an air pump opening 2610 and a sewage tank connection opening 2620 which are correspondingly disposed at the top of the boss 2600 at the assembling position on the sewage tank 5000. An air pump pumps air from the sewage tank 5000 through the air pump opening 2610. The sewage tank 5000 is a closed structure, and thus a negative pressure is formed inside the sewage tank in the pumping process, such that sewage in a washing bin is pumped into the sewage tank 5000 through a sewage pipe and the sewage tank connection opening 2620. A clean water tank connection opening 2630 is correspondingly disposed at the top of the boss 2600 at the assembling position on the clean water tank 4000, and clean water in the clean water tank 4000 flows into a scraper in the washing bin through the clean water tank connection opening 2630 under the action of a peristaltic pump, so as to wash a cleaning head of the automatic cleaning apparatus. The air pump opening 2610, the sewage tank connection opening 2620, and the clean water tank connection opening 2630 are disposed at the top of the boss 2600, such that water in the clean water tank or sewage tank can be prevented from overflowing from the tank and flowing into the clean water chamber or sewage chamber in the process of replacing the clean water tank or the sewage tank. The sealed connections of the air pump opening 2610, the sewage tank connection opening 2620 and the clean water tank connection opening 2630 with the sewage tank 5000 and the clean water tank 4000 at top ends, enable the operation to be more convenient as compared with the connection to the bottom of the clean water chamber or the sewage tank.

The self-cleaning dust collection seat further includes the sewage tank 5000 and the clean water tank 4000 that are disposed in the water storage chamber side by side, as well as the dust collection hood 2800 disposed on the dust collection chamber 2100 and keeps abreast with the sewage tank and the clean water tank. The top surfaces of the sewage tank, the clean water tank, and the dust collection hood are substantially flush to each other, and the front surfaces thereof are substantially flush to each other. A neatly arranged structure is formed by the sewage tank 5000, the clean water tank 4000, and the dust collection hood 2800 that are assembled on the body 2000 of the self-cleaning dust collection seat, which not only facilitates mounting and removal, but also provides the aesthetic neat appearance and enhances the user experience.

After long-term use of the self-cleaning dust collection seat, the soft rubber protruding openings are inevitably contaminated by sewage resulting from washing of a cleaning component, with stains remained. By means of the above-mentioned arrangement, the soft rubber protruding openings on the boss 2600 are open with respect to the front wall, and even with respect to the side wall, such that an arm or a cleaning tool can be in contact with the soft rubber protruding openings from all angles, facilitating a user to clear the dirt accumulated near the soft rubber protruding openings.

When the sewage tank 5000 and the clean water tank 4000 are assembled in the water storage chamber, the top surfaces of the sewage tank and the clean water tank are higher than the rear wall of the body of the self-cleaning dust collection seat, and the sewage tank and a body of the clean water tank are largely located outside the water storage chamber. When the dust collection hood 2800 is assembled in the dust collection chamber 2100, the top surface of the dust collection hood is higher than the rear wall of the body of the self-cleaning dust collection seat, and the dust collection hood is largely located outside the dust collection chamber. With the above-mentioned design, the consumption of a material for the body of the self-cleaning dust collection seat is reduced, and the upper parts of the sewage tank, the clean water tank and the dust collection hood are exposed outside the chambers, which facilitates a person to operate the sewage tank, the clean water tank and the dust collection hood by lifting a handle disposed at the top of each of the sewage tank, the clean water tank and the dust collection hood, which also achieves aesthetic design effect. Meanwhile, the top of the body of the self-cleaning dust collection seat is designed with a lower front wall and a higher rear wall, and the front upper parts of the sewage tank, the clean water tank and the dust collection hood are also exposed outside the chamber, which facilitates a person to observe the water levels in the transparent sewage tank and in the transparent clean water tank, and the condition in the dust collection chamber, allowing for carrying out corresponding operations on the sewage tank, the clean water tank and the dust collection chamber in time.

The dust collection hood 2800 includes an opening in sealed connection with the end surface of the dust collection chamber 2100. The opening is in sealed connection with the end surface of the dust collection bin. The sealed connection allows for complete sealing of the interior of the dust collection bin, which is conducive to improving the dust collection efficiency.

The lower part of the body 2000 of the self-cleaning dust collection seat, together with the body base 6000, form a washing chamber with an opening facing forward. The washing chamber is configured to accommodate the automatic cleaning apparatus when the automatic cleaning apparatus returns to the self-cleaning dust collection seat for maintenance operation. The bottom of the body of the self-cleaning dust collection seat is provided with the washing bin. After the automatic cleaning apparatus is matched with the washing chamber, the cleaning components on the automatic cleaning apparatus are cleaned by means of the washing bin.

When the automatic cleaning apparatus, for example, a sweeping robot, returns to the self-cleaning dust collection seat after completing the sweeping operation, the automatic cleaning apparatus moves to the body base 6000 along the inclined plane of the bottom plate 1000 of the self-cleaning dust collection seat, such that the dust outlet of the automatic cleaning apparatus is docked with the dust collection opening 6100 in the body base 6000, so as to transfer the garbage from the dust box of the automatic cleaning apparatus to the dust collection bin 3000 of the body 2000 of the self-cleaning dust collection seat.

In some embodiments, the body base 6000 and the body 2000 form an undetachable integral part. The body base 6000 further includes a dust collection wind path, which is disposed in the body base 6000 and configured to recover the garbage in the automatic cleaning apparatus. A wind intake of the dust collection wind path is the dust collection opening, and a wind outlet of the dust collection air path is communicated with the dust collection chamber 2100 through the wind duct 2500.

In the embodiment of the present disclosure, the dust collection bin for accommodating the dust collection hood is disposed at the top of the body of the self-cleaning dust collection seat, such that the one dust collection after multiple cleanings by the automatic cleaning apparatus can be achieved, and the defects of reduced cleaning efficiency and poor user experience caused by frequent cleaning of the dust box on the automatic cleaning apparatus are avoided.

In the related art, the structure of a self-cleaning dust collection seat is often more complex. A water tank is disposed in the complex cover cap of the self-cleaning dust collection seat, leading to inconvenience in removal, placement and use. The water tank connection opening is disposed at the bottom of the water tank. As a result, the water in the water tank is prone to overflow, which may very possibly damage devices in the self-cleaning dust collection seat.

To this end, embodiments of the present disclosure provide a self-cleaning dust collection seat, in which a water tank is at least partially exposed on the outer side of a body of the self-cleaning dust collection seat, so as to facilitate the mounting and removal by the user. Furthermore, a water opening of the water tank is formed on the upper part of the water tank, such that a liquid in the water tank is not prone to overflow, avoiding damage to electronic components by the overflow liquid. The same structure has the same technical effect, and some of the technical effects are not repeated herein.

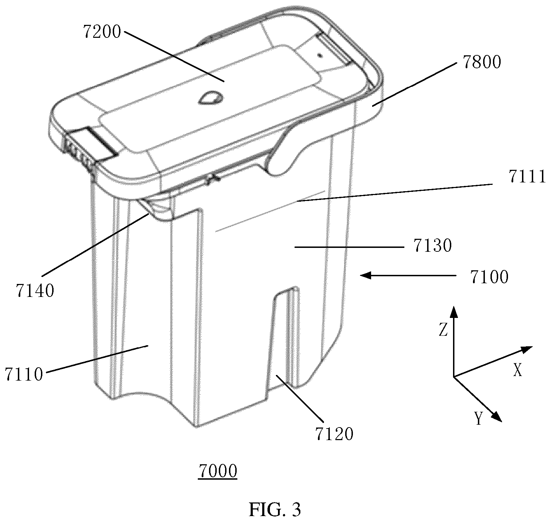

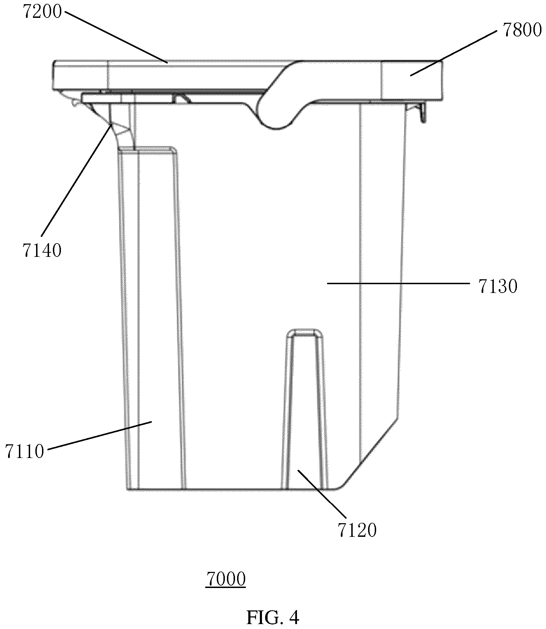

In some embodiments, the self-cleaning dust collection seat provided by the embodiments of the present disclosure is used as an example. FIG. 1 exemplarily shows a schematic diagram of an overall structure of a self-cleaning dust collection seat. FIG. 2 exemplarily shows a schematic structural diagram of a body of the self-cleaning dust collection seat according to the present disclosure, with a sewage tank, a clean water tank and a dust collection hood removed. FIGS. 3 to 5 show the schematic diagrams of a water storage tank of a self-cleaning dust collection seat according to the present disclosure from different viewing angles.

As shown in FIG. 1, the self-cleaning dust collection seat provided in embodiments of the present disclosure includes a bottom plate 1000 of the self-cleaning dust collection seat, a body 2000 of the self-cleaning dust collection seat, and water storage tank 7000. Here, the bottom plate 1000 of the self-cleaning dust collection seat and the body 2000 of the self-cleaning dust collection seat are connected in a detachable or non-detachable manner, so as to facilitate the transportation and maintenance of the bottom plate 1000 of the self-cleaning dust collection seat and the body 2000 of the self-cleaning dust collection seat. The water storage tank 7000 is assembled at the top of the body 2000 of the self-cleaning dust collection seat.

As shown in FIG. 2, the body 2000 of the self-cleaning dust collection seat includes a water storage chamber 2700, and the water storage chamber 2700 is disposed at the top of the body 2000 of the self-cleaning dust collection seat, with an opening thereof facing upward and forward. The water storage chamber 2700 is configured to accommodate the water storage tank 7000. The water storage tank 7000 may be a clean water tank 4000 or a sewage tank 5000. A plurality of water storage tanks 7000 may be provided. In some embodiments, the body 2000 of the self-cleaning dust collection seat includes two water storage tanks 7000, including the clean water tank 4000 and the sewage tank 5000. Accordingly, the water storage chamber includes a clean water chamber 2400 for accommodating the clean water tank 4000, and a sewage chamber 2300 for accommodating the sewage tank 5000. The upward and forward design of the water storage chamber 2700 allows for the assembling of the water storage tank 7000 to the body 2000 of the self-cleaning dust collection seat in a direction from a front side and an upper side. This assembling mode is more in line with the user's using habits, facilitating the mounting and removal of the water storage tank 7000. In addition, the upward and forward design facilitates the daily maintenance of devices in the water storage chamber 2700.

The water storage chamber 2700 is formed by the rear wall, the front wall and a plurality of side walls of the body 2000 of the self-cleaning dust collection seat in a surrounding manner. Here, the height of the rear wall of the body 2000 of the self-cleaning dust collection seat is greater than the height of the front wall of the body 2000 of the self-cleaning dust collection seat. The side walls of the body 2000 of the self-cleaning dust collection seat are connected to the rear wall and the front wall. The end surfaces of the side walls of the body 2000 of the self-cleaning dust collection seat are arc-shaped structures. The arc-shaped structure ensures the stability and aesthetics of the water storage tank 7000 mounted in the water storage chamber 2700.

A boss 2600 attached to the rear wall of the water storage chamber 2700 and extending upwards along the bottom of the water storage chamber 2700 to a position slightly lower than a height of the rear wall of the water storage chamber is further included in the water storage chamber 2700. The height of the boss 2600 is greater than the height of the highest water line of the water storage tank 7000. When the water storage tank 7000 is assembled in the water storage chamber 2700, the boss 2600 receives a water tank projecting portion 7140 of the water storage tank 7000.

The top of the boss 2600 is provided with a plurality of soft rubber protruding openings configured to be connected to the water storage tank 7000 assembled at the corresponding position. In some embodiments, the soft rubber protruding opening is configured to be connected to a sewage opening or a clean water opening in the water storage tank 7000.

In some embodiments, the soft rubber protruding openings include an air pump connection opening 2610 and a sewage tank connection opening 2620, which are correspondingly disposed at the top of the boss 2600 at the assembling position of the sewage tank 5000. An air pump pumps air from the sewage tank 5000 through the air pump opening 2610, and the sewage tank 5000 is a closed structure, such that a negative pressure is formed inside the sewage tank in the pumping process, and sewage in a washing bin is pumped into the sewage tank 5000 through a sewage pipe and the sewage tank connection opening 2620.

In some embodiments, the soft rubber protruding openings include a clean water tank connection opening 2630, which is correspondingly disposed at the top of the boss 2600 at the assembling position of the clean water tank 4000. Clean water in the clean water tank 4000 flows into a scraper in the washing bin through the clean water tank connection opening 2630 under the action of a peristaltic pump, so as to wash a cleaning head of the automatic cleaning apparatus.

The air pump opening 2610, the sewage tank connection opening 2620, and the clean water tank connection opening 2630 are disposed at the top of the boss 2600, such that water in the clean water tank or sewage tank can be prevented from overflowing from the tank and from flowing into the clean water chamber or sewage chamber in the process of replacing the clean water tank or the sewage tank. The sealed connections of the air pump opening 2610, the sewage tank connection opening 2620, and the clean water tank connection opening 2630 with the sewage tank 5000 and the clean water tank 4000 at top ends, enables the operation to be more convenient as compared with the connection to the bottom of the clean water chamber or the sewage tank.

After long-term use of the self-cleaning dust collection seat, the soft rubber protruding openings are inevitably contaminated by sewage resulting from washing of a cleaning component, with stains remained. By means of the above-mentioned arrangement, the soft rubber protruding openings on the boss 2600 are open with respect to the front wall, and even with respect to the side wall, such that an arm or a cleaning tool can be in contact with the soft rubber protruding openings from all angles, facilitating a user to clear the dirt accumulated near the soft rubber protruding openings.

In some embodiments, the top of the boss 2600 may be provided with a plurality of soft rubber protruding points 2640, which correspondingly match pits 7221 that are disposed in the lower surface of the water tank projecting portion 7140 of the water storage tank 7000. When the water storage tank 7000 is assembled in the water storage chamber 2700, the soft rubber protruding points 2640 on the water storage chamber 2700 are limited to the pits 7221 in the water storage tank 7000. The specific number of the soft rubber protruding points 2640 may be set according to the actual situation, and the soft rubber protruding points 2640 may be symmetrically distributed at the top of the boss 2600. For example, in an embodiment, four soft rubber protruding points 2640 are provided and are substantially evenly distributed at the top of the boss 2600. By means of the matched limiting between the soft rubber protruding points 2640 and the pits 7221, the position of the water storage tank 7000 in the water storage chamber 2700 can be more accurate, thereby avoiding position offset of the water storage tank 7000.

A vertically extending partition plate 2710 may be further included in the water storage chamber 2700, and divides the water storage chamber 2700 into two parts, with one part serving as the sewage chamber 2300 for accommodating the sewage tank 5000, and the other part serving as the clean water chamber 2400 for accommodating the clean water tank 4000. The top end of the partition plate 2710 is provided with at least one shock-absorbing cushion 2711, and the shock-absorbing cushion is configured to support a handle when the handle falls, so as to reduce the vibration of the handle. Each of the two sides of the partition plate 2710 is provided with at least one limiting protrusion (not shown). The side wall of each of the sewage tank and the clean water tank facing the partition plate 2710 is provided with at least one limiting recess 7120 matched with the corresponding limiting protrusion. After the sewage tank and the clean water tank are assembled in the sewage chamber and the clean water chamber, the limiting protrusions are matched with the limiting recesses for limiting.

The water storage tank 7000 is detachably assembled at the top of the body 2000 of the self-cleaning dust collection seat. In some embodiments, the water storage tank 7000 is detachably assembled in the water storage chamber 2700. The detachable assembling of the water storage tank 7000 and the upward and forward design of the water storage chamber 2700 allow for convenient mounting and removal of the water storage tank 7000, facilitating a user to routinely replace liquid in the water storage tank 7000. The water storage tank 7000 may be made of a transparent material to facilitate the observation of the liquid level in the water storage tank 7000.

In some embodiments, when the water storage tank 7000 is assembled in the water storage chamber 2700, the top surface of the water storage tank 7000 is higher than the rear wall of the water storage chamber 2700, and the body of the water storage tank 7000 may be largely located outside the water storage chamber 2700. The above design can further optimize the mounting and removal of the water storage tank 7000 to facilitate the user to routinely replace the liquid in the water storage tank 7000, and can reduce the consumption of a material for the body 2000 of the self-cleaning dust collection seat. In addition, the top of the body 2000 of the self-cleaning dust collection seat is designed with a lower front wall and a higher rear wall, and the front upper part of the water storage chamber 2700 is also exposed outside the chamber, which facilitates a user to observe the water level in the transparent waste storage chamber 2700, allowing for carrying out a corresponding operation on the water storage chamber 2700 in time.

The water storage tank 7000 may be a clean water tank 4000 or a sewage tank 5000. A plurality of water storage tanks 7000 may be provided. In some embodiments, the body 2000 of the self-cleaning dust collection seat includes two water storage tanks 7000, namely, a clean water tank 4000 and a sewage tank 5000. The sewage tank 5000 and the clean water tank 4000 may be disposed in the water storage chamber 2700 side by side, and the top surfaces of the sewage tank 5000 and the clean water tank 4000 are substantially flush to each other, and the front surfaces thereof are substantially flush to each other. A neatly arranged structure is formed after the sewage tank 5000 and the clean water tank 4000 are assembled onto the body 2000 of the self-cleaning dust collection seat, which not only facilitates mounting and removal, but also provides the aesthetic neat appearance and enhances the user experience.

The water storage tank 7000 includes an opening for the liquid to flow in or out. This opening is disposed on the upper part of the body of the water storage tank, and the height of the opening is greater than the highest water line 7111 of the water storage tank 7000. When the water storage tank 7000 is the clean water tank 4000, the opening is a clean water opening, and when the water storage tank 7000 is the sewage tank 5000, the opening is a sewage opening. The height of the opening is greater than the highest water line of the water storage tank 7000, such that the liquid in the storage tank 7000 can be prevented from overflow, in particular overflow in the process of the tank replacement, and thus avoiding damage to electronic devices caused by the overflowed liquid.

Referring to FIGS. 3 to 5, the water storage tank 7000 includes a water tank accommodating portion 7100 and a water tank top cover 7200. The water tank top cover 7200 substantially covers the water tank accommodating portion 7100; the water tank accommodating portion 7100 includes a water tank body portion 7130 and a water tank projecting portion 7140. The water tank top cover 7200 and the water tank accommodating portion 7100 form a chamber together. The water tank projecting portion 7140 protrudes from the water tank body portion 7130, such that the water storage tank forms a substantially L-shaped structure.

The water tank accommodating portion 7100 is configured to accommodate a liquid. The side wall of the water tank accommodating portion 7100 includes at least one recess extending upwards from the bottom of the water tank accommodating portion, and the recess may be matched with a protrusion within the water storage chamber 2700 for a limiting purpose. In some embodiments, the side wall of the water tank accommodating portion 7100 includes a first recess 7110 extending upwards from the bottom of the water tank accommodating portion to a position higher than the highest water line 7111, and a second recess 7120 extending upwards from the bottom of the water tank accommodating portion to a preset height, and the height of the second recess 7120 is not limited. Here, the first recess 7110 is matched with at least a part of the boss 2600 for a limiting purpose. The top surface of the first recess 7110 forms at least a part of the bottom surface of the water tank projecting portion 7140. The top surface of the first recess 7110 may include a clean water opening, a sewage opening, the pits 7221 or the like, which is matched with the air pump opening 2610, the sewage tank connection opening 2620, the clean water tank connection opening 2630 or the soft rubber protruding points 2640, which are disposed on the boss 2600, and connected thereto. The second recess 7120 and a protrusion on the internal side wall of the water storage chamber 2700 are matched for a limiting purpose. By means of the recess disposed at the water tank accommodating portion 7100, the overall limiting of the water storage tank 7000 can be achieved, such that the water storage tank 7000 is more accurately disposed at the corresponding position on the water storage chamber 2700, avoiding position offset of the water storage tank 7000.

The top cover 7200 covers the water tank accommodating portion 7100, which is detachably connected to the water tank accommodating portion 7100, and can be opened or closed relative to the water tank accommodating portion 7100. When the top cover 7200 is closed, the liquid in the water tank accommodating portion 7100 is isolated from the outside, such that external foreign matters can be prevented from falling into the water storage tank 7000. Optionally, when the top cover 7200 is closed, the top cover 7200 is in closed contact with the water tank accommodating portion 7100, and the top cover 7200 and the water tank accommodating portion 7100 form a closed structure together.

The lower surface of the water tank projecting portion 7140 is provided with the clean water opening, the sewage opening, the pits 7221, or the like. When the water storage tank 7000 is the sewage tank 5000, the lower surface of the water tank projecting portion 7140 is provided with the sewage opening. When the water storage tank 7000 is the clean water tank 4000, the lower surface of the water tank projecting portion 7140 is provided with the clean water opening. When the water storage tank 7000 is assembled in the water storage chamber 2700, the water tank projecting portion 7140 is exactly received by the boss 2600 in the water storage chamber 2700, and the sewage opening or the clean water opening in the lower surface of the water tank projecting portion 7140 is connected to the soft rubber protruding opening at the top of the boss 2600.

In some embodiments, the water storage tank 7000 is the sewage tank 5000, and the lower surface of the water tank projecting portion 7140 is further provided with an air pump connection opening connected to the air pump opening 2610 at the top of the boss 2600. After the air pump opening 2610 is connected to the air pump connection opening, the sewage may be pumped into the sewage tank 5000. In some embodiments, the air pump pumps air from the sewage tank 5000 through the air pump opening 2610 and the air pump connection opening. The sewage tank 5000 is a closed structure, and thus a negative pressure is formed inside the sewage tank in the pumping process, such that sewage in a washing bin is pumped into the sewage tank 5000 through a sewage pipe and the sewage tank connection opening 2620.

The lower surface of the water tank projecting portion 7140 may also be provided with a plurality of pits 7221. When the water storage tank 7000 is assembled in the water storage chamber 2700, the water tank projecting portion 7140 is exactly received by the boss 2600 in the water storage chamber 2700, and the plurality of pits 7221 disposed on the lower surface of the water tank projecting portion 7140 are matched with the soft rubber protruding points at the top of the boss 2600, so as to limit the water storage tank 7000. By means of the matched limiting between the soft rubber protruding points 2640 and the pits 7221, the position of the water storage tank 7000 in the water storage chamber 2700 can be more accurate, thereby avoiding position offset of the water storage tank 7000.

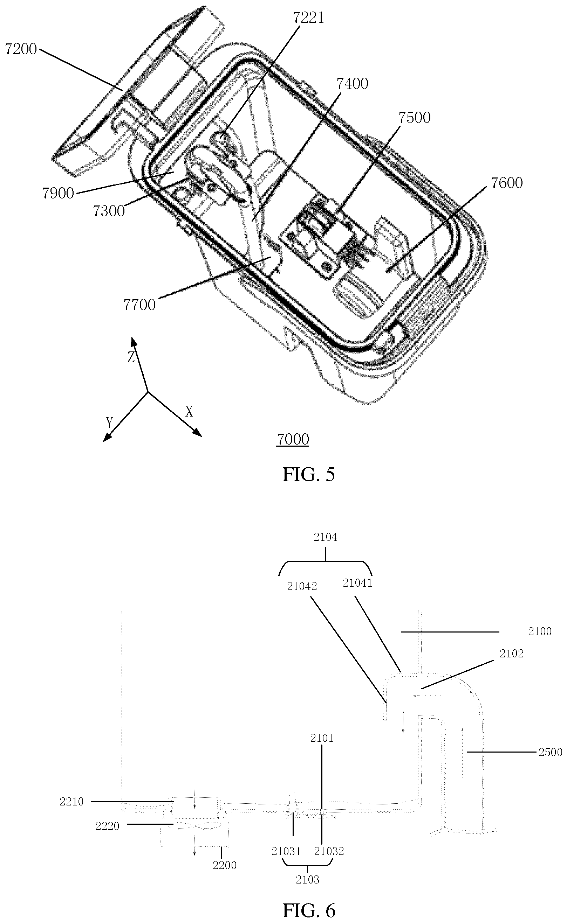

As shown in FIG. 5, in some embodiments, the water storage tank 7000 is the clean water tank 4000. In this case, the water storage tank 7000 may further include a water pipe support 7300 and a water pipe 7400. The water pipe support 7300 is disposed on a protruded structure 7900 in the clean water tank 4000. The protruded structure 7900 is correspondingly formed by the first recess 7110, and is higher than the highest water line of the clean water tank 4000. The water pipe 7400 extends from the water pipe support 7300 to the bottom of the clean water tank 4000, and the liquid may flow out of the clean water tank 4000 through the water pipe 7400. The water pipe 7400 includes a water pipe inlet and a water pipe outlet. Here, the water pipe inlet is located at the bottom of the clean water tank 4000. The water pipe outlet is located at the water pipe support 7300, and may be connected to the clean water opening of the clean water tank 4000.

In some embodiments, the water storage tank 7000 is the clean water tank 4000. In this case, the water storage tank 7000 may further include a floating ball base 7500 and a floating ball 7600. Here, the floating ball base 7500 is disposed at the bottom of the clean water tank 4000, and is configured for placement of the floating ball 7600. The floating ball 7600 is connected to the floating ball base 7500, and can rotate around a fixed axis on the floating ball base 7500. The floating ball 7600 is configured to detect a water level in the water storage tank.

In some embodiments, the water storage tank 7000 is the clean water tank 4000. In this case, the water storage tank 7000 may further include a filter screen 7700. The filter screen 7700 is disposed at the end portion of the water pipe inlet, and is configured to filter the liquid when the liquid enters the water pipe 7400.

The water storage tank 7000 may also include a handle 7800. The handle 7800 may be hinged to the top of the water storage tank 7000. Due to the handle 7800, the mounting and removal of the water storage tank 7000 can be more convenient, facilitating a user to routinely replace the liquid in the water storage tank 7000.

Embodiments of the present disclosure provide a self-cleaning dust collection seat, in which a water tank is at least partially exposed on an outer side of a body of the self-cleaning dust collection seat, so as to facilitate the mounting and removal by the user. Furthermore, a water opening of the water tank is disposed at the upper part of the water tank, such that a liquid in the water tank is not prone to overflow, avoiding damage to an electronic component caused by the overflowed liquid.

In the related art, a fan of the self-cleaning dust collection seat is disposed in a fan compartment, which is disposed at the bottom of a dust collection bin. A ventilation hole is formed at the bottom of the dust collection bin. When working, the fan produces a suction force to suck air from the dust collection bin, and the air is then discharged to the outside of the body 2000 of the self-cleaning dust collection seat through the wind duct in the fan compartment. Due to the close distance between a dust collection opening and a washing bin, residual water in the washing bin may be brought into the dust collection opening by a robot during the entering and leaving a station. If there are too much water, the fan may suck the water into the dust collection bin through the wind duct when the fan is working, and excessive water accumulation in the dust collection bin may cause damage to the fan and cause an electric shock risk.

To this end, embodiments of the present disclosure provide a self-cleaning dust collection seat, in which a drain hole is disposed at the bottom of the dust collection bin, such that the liquid entering the dust collection bin can be conveniently drained in time. The same structure has the same technical effect, and some technical effects are not repeated herein. In some embodiments, as shown in FIG. 6, a self-cleaning dust collection seat includes a bottom plate 1000 of the self-cleaning dust collection seat and a body 2000 of the self-cleaning dust collection seat, and the bottom plate 1000 and the body 2000 of the self-cleaning dust collection seat are connected in a detachable or non-detachable manner to facilitate transportation. The body 2000 of the self-cleaning dust collection seat includes a dust collection chamber 2100. A dust collection hood 2800 is disposed to cover the dust collection chamber 2100 to form a dust collection bin 3000. The dust collection chamber 2100 is integrally disposed at the top of the body 2000 of the self-cleaning dust collection seat. The top end of the body 2000 of the self-cleaning dust collection seat is recessed inwards to form the dust collection chamber 2100 for accommodating various components for dust collection. The dust collection chamber 2100 includes a drain hole 2101, which is formed at the bottom of the dust collection chamber. One or more drain holes 2101 may be provided. The drain holes are formed based on the internal space of the dust collection chamber 2100, and are generally formed at lower positions at the bottom of the dust collection chamber, facilitating drainage of the liquid. The body 2000 of the self-cleaning dust collection seat further includes a wind duct 2500. One end of the wind duct 2500 is communicated with the dust collection opening 6100 of a body base 6000, and the other end of the wind duct 2500 is communicated with the dust collection chamber 2100. A side wall of the dust collection chamber 2100 includes a wind inlet 2102, which is communicated with the dust collection opening 6100 of the body base 6000 through the wind duct 2500. The wind duct is formed on the side wall of the body 2000 of the self-cleaning dust collection seat, extends downward, and is communicated with the dust collection opening 6100 in the body base 6000 by passing through the body base 6000. Here, when the self-cleaning dust collection seat is in a dust collection state, the airflow inside the dust collection bin 3000 is led to the outside of the dust collection bin 3000 through the wind duct 2500, and the drain hole 2101 is not communicated with the outside of the dust collection bin 3000, so as to ensure that sufficient negative pressure is formed in the dust collection bin to suck the garbage from a dust box into a dust collection bag through the dust collection opening and the wind duct. When the self-cleaning dust collection seat is not in the dust collection state, an internal wind opening of the dust collection bin 3000 is closed, such that the airflow in the dust collection bin 3000 is not led to the outside of the dust collection bin 3000, and the drain hole 2101 is communicated with the outside of the dust collection bin 3000. In this case, if liquid exists in the dust collection process, the liquid, for example, water on mop cloth, will enter the dust collection bin 3000 through the wind duct. Then, after the drain hole 2101 is opened, the liquid will flow out of the dust collection bin 3000, avoiding damage to a component in the dust collection bin, particularly damage to the fan.

In some embodiments, the dust collection bin 3000 further includes a drain valve 2103, which is disposed on the outer side of the bottom of the dust collection bin 3000 and near an outlet of the drain hole 2101. The drain valve 2130 can be operated as follows: when the self-cleaning dust collection seat is in the dust collection state, the drain hole is closed under the action of the negative pressure in the dust collection bin, such that the drain hole 2101 is not communicated with the outside of the dust collection bin 3000, and when the self-cleaning dust collection seat is not in the dust collection state, the drain valve 2103 is opened under the action of gravity, such that the drain hole 2101 is communicated with the outside of the dust collection bin 3000.

In some embodiments, the drain valve 2103 includes a fixed end 21031 and an elastic movable end 21032, and the fixed end 21031 is fixedly mounted on the outer side of the bottom of the dust collection bin 3000 by means of screwing, bonding, clamping or the like. The elastic movable end 21032 is disposed at the outlet of the drain hole 2101 in such a manner that it is switchable between an open state and a closed state. The elastic movable end 21032 is made of rubber, plastic and other soft rubber plug materials. Under normal conditions, the drain hole 2101 is in an open state, and if there is water at the bottom of the dust collection bin 3000, the water will be automatically drained from the drain hole 2101. When the fan is running, a negative pressure is formed in the dust collection bin 3000, and the elastic movable end 21032 is automatically sucked and closed on the outer side of the drainage hole to achieve sealing. After the fan is stopped, the elastic movable end 21032 is automatically opened under the action of gravity, and water, if any, in the dust collection bin 3000 will be drained from the drain hole 2101 again.

In some embodiments, the side wall of the dust collection bin 3000 includes a water blocking structure 2104, which is disposed on the edge of the wind inlet 2102 and is configured to block the liquid entering from the air inlet. In some embodiments, the water blocking structure 2104 includes a first blocking wall 21041 extending transversely along the edge of the wind inlet 2102 and a second blocking wall 21042 extending downward, and the first blocking wall 21041 and the second blocking wall 21042 form an air inflow region. In some embodiments, the second blocking wall 21042 extends at least downward to the lower edge of the wind inlet 2102 to block the liquid entering from the wind inlet 2102.

In some embodiments, the body 2000 of the self-cleaning dust collection seat further includes a fan compartment 2200, a fan channel 2210 and a fan 2220. The fan compartment 2200 is disposed below the dust collection bin 3000 to accommodate the fan. The fan channel 2210 is configured to make the fan compartment and the dust collection bin be communicated with each other, such that a suction wind force is provided by the fan. The fan 2220 is disposed in the fan compartment and is turned on or turned off under the control of a control system, so as to provide the suction wind force required for dust collection. In some embodiments, the fan channel 2210 extends upward a preset distance from the bottom of the dust collection bin 3000, such that the fan channel 2210 protrudes from the bottom of the dust collection bin 3000, so as to avoid the liquid, which enters the dust collection bin 3000 and is not drained in time, entering the fan compartment 2200, which would damage the fan.

According to the self-cleaning dust collection seat provided in embodiments of the present disclosure, the body of the self-cleaning dust collection seat includes a dust collection bin. The dust collection bin includes a drain hole and a wind duct. The drain hole is formed at the bottom of the dust collection bin. One end of the wind duct is communicated with the bottom plate, and the other end of the wind duct is communicated with the dust collection bin. When the self-cleaning dust collection seat is in a dust collection state, the wind duct is communicated with the outside of the dust collection bin, and the drain hole is not communicated with the outside of the dust collection bin, which ensures the negative pressure state in the dust collection bin that is beneficial to the dust collection operation. When the self-cleaning dust collection seat is not in the dust collection state, the wind duct is not communicated with the outside of the dust collection bin, and the drain hole is communicated with the outside of the dust collection bin, such that the water entering the dust collection bin is drained in time, without damaging a component in the dust collection bin.

In the related art, in the process of dust collection, a fan in a self-cleaning dust collection seat rotates to produce larger vibration, which may damage the wall of the fan compartment in contact with the fan, and moreover, larger noise will be caused due to the vibration.

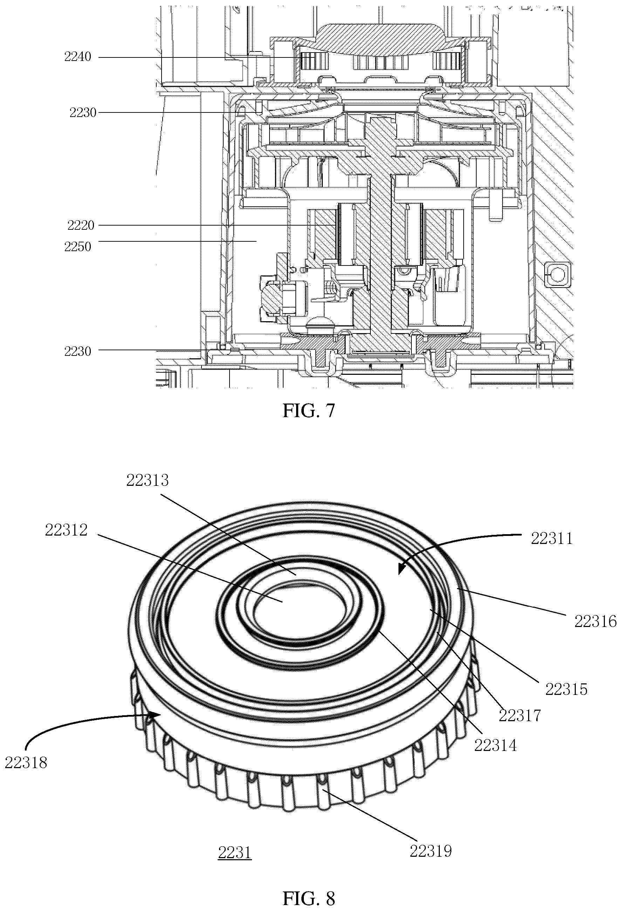

To this end, embodiments of the present disclosure provide a self-cleaning dust collection seat, in which a plurality of shock-absorbing devices are disposed in a fan compartment, so as to reduce vibration caused by the rotation of a fan. The same structure has the same technical effect, and some of the technical effects are not repeated herein. In some embodiments, as shown in FIG. 7, a self-cleaning dust collection seat includes a bottom plate 1000 of the self-cleaning dust collection seat and a body 2000 of the self-cleaning dust collection seat. The bottom plate 1000 of the self-cleaning dust collection seat and the body 2000 of the self-cleaning dust collection seat are connected in a detachable or non-detachable manner. The body 2000 of the self-cleaning dust collection seat includes a fan compartment 2200, a fan 2220 and a shock-absorbing device 2230. The fan compartment 2200 is integrally disposed in the body 2000 of the self-cleaning dust collection seat. The fan compartment 2200 includes an air inlet 2240 and an exhaust vent 2250. The air inlet 2240 is configured to be communicated with the dust collection bin 3000 through a fan channel 2210. The fan rotates to suck air out of the dust collection bin 3000, so as to ensure that the negative pressure is formed in the dust collection bin 3000. The sucked air enters the fan via the air inlet 2240, and then is discharged via the exhaust vent 2250. The fan 2220 is disposed in the fan compartment 2200, and rotates clockwise or counterclockwise under the control of a control system. The shock-absorbing device 2230 is assembled on at least a part of the outer surface of the fan 2220, to reduce the vibration of the fan 2220, and the shock-absorbing device 2230 may be made of an elastic material such as rubber and plastic.

In some embodiments, as shown in FIG. 8, the shock-absorbing device 2230 includes a shock-absorbing hood 2231, which is assembled on at least a part of the top of the fan 2220 to reduce the vibration of the fan. The appearance of the shock-absorbing hood 2231 is matched with the structure of the top of the fan, such that the shock-absorbing hood 2231 can exactly cover the top of the fan. In some embodiments, the shock-absorbing hood 2231 includes a top surface 22311 of the shock-absorbing hood. The top surface 22311 of the shock-absorbing hood includes a first opening 22312 matched with the air inlet 2240, and a projecting edge 22313 extending outward along the first opening 22312. The top surface of the shock-absorbing hood is configured to be assembled between the top of the fan 2220 and the air inlet 2240, to reduce the vibration of the fan. In some embodiments, an opening area of the projecting edge 22313 increases with the increase of an outward extension distance of the projecting edge, such that after the shock-absorbing hood 2231 is assembled on the top surface of the fan and in the fan compartment, the horn-shaped projecting edge 22313 can exactly support the air inlet of the fan compartment in a surrounding manner, thereby reducing the influence of vibration and noise while sealing the air inlet. In some embodiments, the top surface 22311 of the shock-absorbing hood further includes at least one protrusion extending circumferentially and continuously around the first opening 22312, and the protrusion is configured to be abutted onto the inner wall of the top surface of the fan compartment 2200, to reduce the vibration of the fan 2220. In some embodiments, the top surface 22311 of the shock-absorbing hood further includes a first protrusion 22314, a second protrusion 22315 and a third protrusion 22316, which extend circumferentially and continuously around the first opening 22312. A groove 22317 extending circumferentially and continuously around the first opening 22312 is formed between the second protrusion 22315 and the third protrusion 22316. The first protrusion 22314, the second protrusion 22315, the third protrusion 22316 and the groove 22317 may deform under the action of pressing during an assembling process, such that the hard connection between the fan and the fan compartment is reduced, thereby reducing the damage caused by vibration. In some embodiments, a plurality of discontinuous cavities is included inside the third protrusion 22316 to further reduce the vibration of the fan.

In some embodiments, as shown in FIG. 8, the shock-absorbing hood includes a side wall 22318 of the shock-absorbing hood. The side wall 22318 of the shock-absorbing hood extends downward along the top surface 22311 of the shock-absorbing hood. When the shock-absorbing hood 2231 is disposed to cover the top surface of the fan, the side wall 22318 of the shock-absorbing hood wraps the side surface of the fan. Here, the side wall 22318 of the shock-absorbing hood includes a plurality of first convex beams 22319 disposed at intervals. The first convex beams 22319 are hollow structures. The outer wall of each of the first convex beams 22319 is abutted onto the side wall of fan compartment 2200, so as to further reduce the vibration produced when the fan is working.

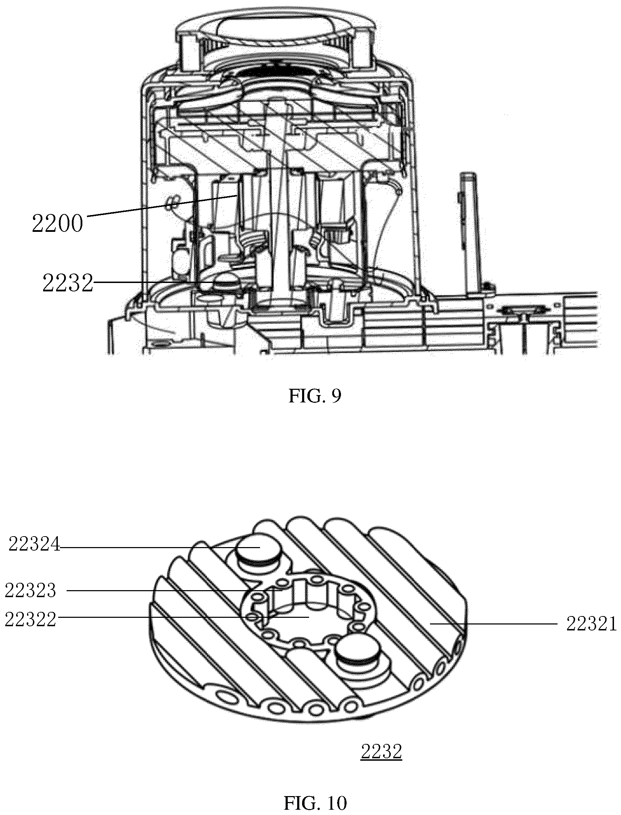

In some embodiments, as shown in FIG. 9, the shock-absorbing device 2230 further includes a shock-absorbing cushion 2232, which is assembled on at least a part of the bottom of the fan 2220 to reduce the vibration of the fan 2220. In some embodiments, as shown in FIG. 10, the shock-absorbing cushion 2232 includes a second opening 22322 matched with the exhaust vent, and a plurality of second convex beams 22321 extending transversely along the upper surface of the shock-absorbing cushion 2232. Here, the second convex beams 22321 are hollow structures, and the side wall 2231 of each of the second convex beams is in contact with the bottom of the fan 2220, which further reduces the vibration of the fan. After the shock-absorbing cushion 2232 is assembled at the bottom of the fan 2220, an air exhaust structure at the bottom of the fan extends into the second opening 22322. The bottom of the fan is in interference clamping with an assembling protrusion 22324 of the shock-absorbing cushion 2232. The plane of the bottom of the fan is in contact with the plurality of second convex beams 22321 extending transversely on the upper surface of the shock-absorbing cushion 2232. The hollow second convex beams 22321 play the role in reducing vibration. In some embodiments, the shock-absorbing cushion 2232 further includes a plurality of third convex beams 22323 extending longitudinally along the inner side wall of the second opening 22322. The air exhaust structure at the bottom of the fan extends into the second opening 22322, to be in tight contact with the plurality of third convex beams 22323. The third convex beams 22323 are hollow structures, which further reduce the vibration of the fan.

In the self-cleaning dust collection seat provided by embodiments of the present disclosure, the body of the self-cleaning dust collection seat includes a fan disposed in a fan compartment and a shock-absorbing device assembled on at least a part of the outer surface of the fan. A plurality of shock-absorbing structures are disposed on the shock-absorbing device, such that the influence of the vibration of the fan on the self-cleaning dust collection seat can be reduced.

In the related art, because a lifting structure is generally used for a cleaning module (for example, a mop support of a wet cleaning module) on the bottom surface of an automatic cleaning apparatus, the cleaning module would not adhere to the bottom of the automatic cleaning apparatus in natural gravity state. Moreover, if a dust collection opening of the automatic cleaning apparatus is located in the front of the washing bin, the cleaning module on the bottom surface of the automatic cleaning apparatus has to pass by the dust collection opening during entering and leaving the station. When passing by the dust collection opening, the cleaning module (in particular the mop support) is easily stuck in the dust collection opening. As a result, the automatic cleaning apparatus cannot enter the station or leave the station successfully. Particularly, in the process that the automatic cleaning apparatus enters the station, the driving force for backward entering the station is generally small, making it difficult to enter the station successfully. In addition, when the cleaning module is the wet cleaning module, newly cleaned mop cloth is not dry completely, and if the mop cloth rubs against the dust collection opening, water on the mop cloth will be pressed into the dust collection opening, and then sucked to a dust collection box, causing damage to a fan.

To this end, embodiments of the present disclosure provide a self-cleaning dust collection seat. By arranging lifting structures on a bottom plate body, the scratching or jamming occurring to a cleaning module in the process of the automatic cleaning apparatus entering and leaving the station can be avoided, and a success rate of the automatic cleaning apparatus entering and leaving the station can be improved. The same structure has the same technical effect, and some of the technical effects are not repeated herein.

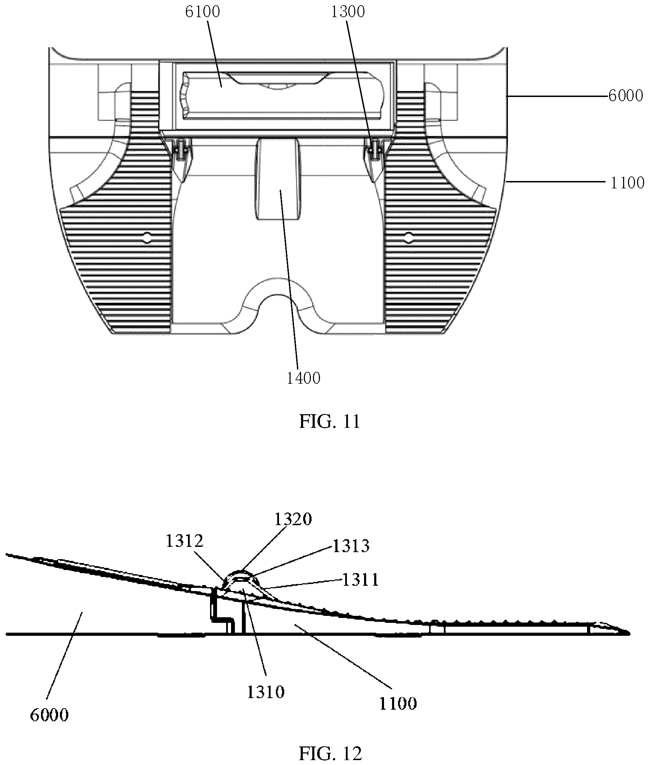

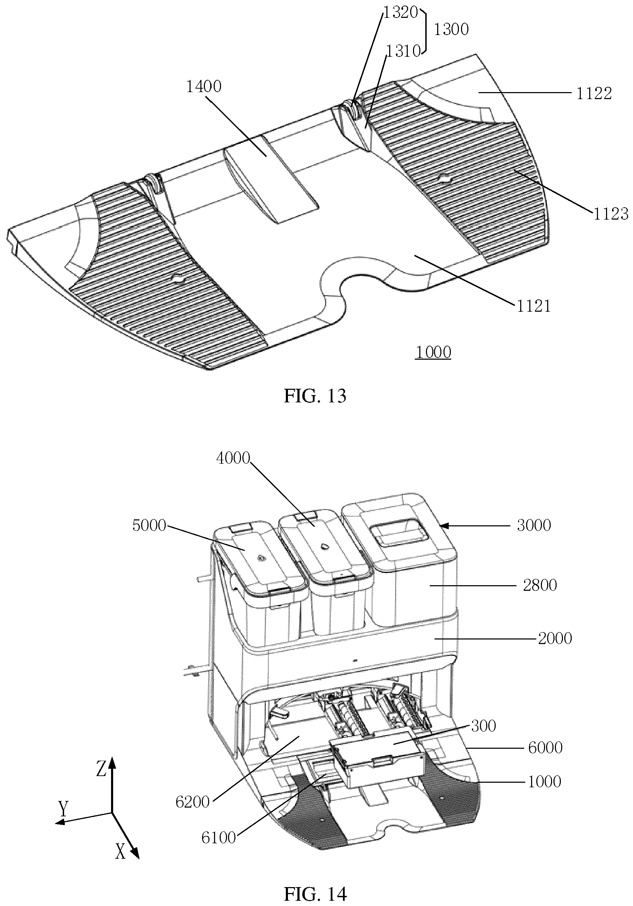

In some embodiments, the self-cleaning dust collection seat provided by embodiments of the present disclosure is used as an example. FIGS. 11 and 12 exemplarily show a bottom plate of the self-cleaning dust collection seat connected to a body base from different angles. FIG. 13 exemplarily shows a schematic structural diagram of a bottom plate of a self-cleaning dust collection seat.

As shown in FIG. 1, the self-cleaning dust collection seat provided in embodiments of the present disclosure includes a bottom plate 1000 of the self-cleaning dust collection seat and a body 2000 of the self-cleaning dust collection seat.

The body 2000 of the self-cleaning dust collection seat is configured to collect garbage from a dust box of the automatic cleaning apparatus. In some embodiments, a dust collection bin 3000, a clean water tank 4000, a sewage tank 5000 and other components may also be disposed on the body 2000 of the self-cleaning dust collection seat. A body base 6000 is integrally disposed below the body 2000 of the self-cleaning dust collection seat. In some embodiments, the bottom plate 1000 of the self-cleaning dust collection seat and the body base 6000 are connected in a detachable or non-detachable manner to facilitate transportation.

In some embodiments, the body base 6000 below the body 2000 of the self-cleaning dust collection seat includes a washing bin 6200, which is configured to supplement a cleaning solution to a wet cleaning module of the automatic cleaning apparatus, and/or to accommodate debris removed from the wet cleaning module, and/or to collect sewage generated in the process of cleaning the wet cleaning module, thereby facilitating the subsequent treatment of the debris and sewage. In some embodiments, the washing bin 6200 is disposed behind the dust collection opening 6100.

As shown in FIG. 11, the bottom plate 1000 of the self-cleaning dust collection seat includes a bottom plate body 1100 and a lifting structure 1300.

The bottom plate body 1100 is configured to support the automatic cleaning apparatus when the automatic cleaning apparatus returns to the bottom plate 1000 of the self-cleaning dust collection seat. In other words, the automatic cleaning apparatus may move onto the bottom plate 1000 of the self-cleaning dust collection seat and is supported by the bottom plate body 1100. In some embodiments, in the process of the automatic cleaning apparatus moving onto the bottom plate 1000 of the self-cleaning dust collection seat, driving wheels of the automatic cleaning apparatus travel on an inclined plane of the bottom plate body 1100.

Referring to FIGS. 11 and 12, the body base 6000 and the bottom plate body 1100 are disposed sequentially in a first direction X, and the bottom plate 1000 and the body base 6000 are connected to each other. In some embodiments, in the first direction X, the body base 6000 includes a starting end and a terminating end, and the bottom plate body 1100 also includes a starting end and a terminating end. The terminating end of the body base 6000 and the starting end of the bottom plate body 1100 are abutted with each other. In some embodiments, the body base 6000 and the bottom plate body 1100 are connected in a detachable or non-detachable manner to facilitate transportation.

The body base 6000 and the bottom plate body 1100 form at least a continuous inclined plane in the first direction X, to allow the driving wheels of the automatic cleaning apparatus to travel on the inclined plane relatively smoothly. In some embodiments, the driving wheels of the automatic cleaning apparatus are located on two sides of the bottom, and accordingly, the body base 6000 and the bottom plate body 1100 form a continuous inclined plane that matches the positions of the driving wheels, to allow the driving wheels to travel on the inclined plane. In some embodiments, the bottom plate body 1100 further includes a recessed portion 1121 and raised portions 1122. Here, the recessed portion 1121 is located at the center of the bottom plate body 1100, and the raised portions 1122 are located on two sides of the recessed portion. An included angle between the upper surface of the recessed portion 1121 and the horizontal plane is smaller than an included angle between the upper surface of the raised portion 1122 and the horizontal plane.

In some embodiments, the included angle between the upper surface of the recessed portion 1121 and the horizontal plane may be close to zero. The starting end of each raised portion 1122 and the terminating end of the body base 6000 are abutted with each other and are of the same height, such that the raised portions 1122 and the body base 6000 form two continuous inclined planes matched with the driving wheels. By arranging the recessed portion 1121 at the middle position of the bottom plate body 1100, the automatic cleaning apparatus can be prevented from being blocked by or rubbed against the surface of the bottom plate body 1100 in the process of entering and leaving a station.

Further, each raised portion 1122 of the bottom plate body 1100 is provided with an anti-skid structure 1123 in the first direction X, and the anti-skid structures 1123 are disposed at least at the starting and terminating ends of the bottom plate body 1100 in the first direction. The anti-skid structure 1123 may be a convex bar or a groove of any shape. For example, the anti-skid structure may be a strip-like protrusion extending in the second direction Y, with the second direction Y being perpendicular to the first direction X. The arrangement of the anti-skid structures 1123 on the raised portions 1122 can further help the automatic cleaning apparatus to enter and leave the station successfully.

In some embodiments, the body base 6000 includes an upper surface, which is denoted as a first upper surface. When the body base 6000 is placed on the horizontal ground, the upper surface of the body base 6000 has a predetermined inclination angle relative to the horizontal plane, and a slope factor corresponding to the predetermined inclination angle is denoted as a first slope factor. In some embodiments, the bottom plate body 1100 includes an upper surface, which is denoted as a second upper surface. When the bottom plate body 1100 is placed on the horizontal ground, the upper surface of the bottom plate body 1100 has a predetermined inclination angle relative to the horizontal plane, and a slope factor corresponding to the predetermined inclination angle is denoted as a second slope factor. In some embodiments, the bottom plate body 1100 includes a recessed portion 1121 and raised portions 1122, and the second slope factor is the slope factor of the upper surface of each raised portion 1122 relative to the horizontal plane. In some embodiments, the following relationship may exist between the first slope factor and the second slope factor: the first slope factor is greater than the second slope factor. Since the power of the automatic cleaning apparatus is relatively small when the automatic cleaning apparatus just enters the station, the second slope factor is set to be smaller, which is conducive to the automatic cleaning apparatus to enter a station.

As shown in FIG. 13, the dust collection opening 6100 is configured to be docked with a dust outlet of the automatic cleaning apparatus, and the garbage in the dust box of the automatic cleaning apparatus enters a dust collection station of the body 2000 of the self-cleaning dust collection seat through the dust collection opening 6100. In some embodiments, a sealing rubber gasket is further disposed around the dust collection opening 6100 for a purpose of sealing after the dust collection opening 6100 is docked with the dust outlet of the automatic cleaning apparatus, thereby preventing garbage leakage. The dust collection opening 6100 is located on the upper surface of the body base 6000, and is substantially located at an edge of a joint between the body base 6000 and the bottom plate body 1100.

Referring to FIGS. 11 and 12, the lifting structure 1300 is disposed on the upper surface of the bottom plate body 1100, and is substantially located at the edge of the joint between the bottom plate body 1100 and the body base 6000. In some embodiments, the lifting structure 1300 is disposed in the recessed portion 1121 of the bottom plate body 1100, and configured to press the cleaning module located on the bottom surface of the automatic cleaning apparatus in the process of the automatic cleaning apparatus moving backward (at this point, a direction from the front side of the automatic cleaning apparatus toward the outer side of the body 2000 of the self-cleaning dust collection seat, i.e., in the first direction X) onto the bottom plate 1000 of the self-cleaning dust collection seat, such that the cleaning module moves toward the interior of the automatic cleaning apparatus. For example, the cleaning module located on the bottom surface of the automatic cleaning apparatus is pressed into the automatic cleaning apparatus.

In the process of the automatic cleaning apparatus moving backwards onto the bottom plate 1000 of the self-cleaning dust collection seat in the first direction X to allow the dust outlet of the automatic cleaning apparatus to be docked with the dust collection opening 6100 of the body base 6000, if the upper surface of the bottom plate body 1100 is not provided with the lifting structures 1300, the cleaning module (for example, the mop support of the wet cleaning module) of the automatic cleaning apparatus may be stuck in the dust collection opening 6100 when passing by the dust collection opening 6100, such that the automatic cleaning apparatus 100 cannot enter or leave the station successfully.

Due to the arrangement of the lifting structures 1300 on the upper surface of the bottom plate body 1100, in the process of the automatic cleaning apparatus moving backward onto the bottom plate 1000 of the self-cleaning dust collection seat in the first direction X to allow the cleaning module of the automatic cleaning apparatus to be docked with a washing bin in the body 2000 of the self-cleaning dust collection seat, the lifting structure 1300 may first be abutted with at least a part of a frame of the cleaning module, such that the cleaning module can be lifted up for a certain height (for example, 8 mm). At this point, the cleaning module is pressed by the lifting structure 1300, allowing the cleaning module to move toward the interior of the automatic cleaning apparatus (for example, the cleaning module is pressed into the automatic cleaning apparatus by the lifting structure 1300). Then, as the automatic cleaning apparatus continues to travel backward in the first direction X, the frame of the cleaning module is passing above the dust collection opening 6100 and is gradually disengaged from the lifting structures 1300. In this process, even if the cleaning module is completely disengaged from the lifting structures 1300, the cleaning module can still pass smoothly the dust collection opening 6100 in a clinging manner, because the cleaning module has been partially or completely located above the dust collection opening 6100. After completely passing the dust collection opening 6100, the cleaning module gradually returns, under the action of gravity, to a state before being pressed by the lifting structure 1300. That is, at least a part of the cleaning module protrudes from the automatic cleaning apparatus toward a direction away from the automatic cleaning apparatus. In this way, the cleaning module falls back for a certain height (for example, 8 mm) under the action of gravity, allowing for completion of the docking between the cleaning module and the washing bin.

By arranging the lifting structure 1300 on the upper surface of the bottom plate body 1100, the dust collection opening 6100 can be prevented from blocking the cleaning module in the process of the automatic cleaning apparatus entering or leaving a station, thereby improving the success rate of the automatic cleaning apparatus entering and leaving the station.

In some embodiments, the lifting structure 1300 includes a wedge-shaped component 1310 and a roller 1320.

The wedge-shaped component 1310 is disposed on the upper surface of the bottom plate body 1100 and protrudes from the upper surface of the bottom plate body 1100 in a direction away from the upper surface. The wedge-shaped component 1310 includes a first inclined plane 1311, a first top surface 1313 and a second inclined plane 1312 in sequence in the first direction X, and the first inclined plane 1311, the first top surface 1313 and the second inclined plane 1312 are abutted with each other in sequence in the first direction X.

An acute included angle between the first inclined plane 1311 and the upper surface of the bottom plate body 1100 where the first inclined plane is located is a first included angle α, and an acute included angle between the second inclined plane 1312 and the upper surface of the bottom plate body 1100 where the second inclined plane is located is a second included angle β. In some embodiments, the first included angle α is smaller than the second included angle β, such that when moving backward onto the bottom plate body 1100 in the first direction X, the automatic cleaning apparatus can be pressed smoothly and fall back quickly. In some embodiments, the range of the first included angle α may be 5° to 25°, for example, 10° to 15°, such that when the automatic cleaning apparatus moves backward onto the bottom plate body 1100 in the first direction X, the cleaning module located on the bottom surface of the automatic cleaning apparatus is gently pressed by the lifting structure 1300. In some embodiments, the range of the second included angle β may be 75° to 90°, for example, 80° to 85°, such that the cleaning module falls back quickly under the action of gravity after the frame of the cleaning module is separated from the lifting structure 1300.

It can be understood that if the wedge-shaped component 1310 is disposed in the recessed portion 1121 of the bottom plate body 1100, the first included angle α is an included angle between the first inclined plane 1311 and the upper surface of the recessed portion 1121, and the second included angle β is an included angle between the second inclined plane 1312 and the upper surface of the recessed portion 1121. If the wedge-shaped component 1310 is disposed on the raised portion 1122 of the bottom plate body 1100, the first included angle α is an included angle between the first inclined plane 1311 and the upper surface of the raised portion 1122, and the second included angle β is an included angle between the second inclined plane 1312 and the upper surface of the raised portion 1122.

The roller 1320 is disposed on the first top surface 1313, and is configured to be in rolling contact with the cleaning module in a process of the cleaning module located on the bottom surface of the automatic cleaning apparatus being pressed to move toward the interior of the automatic cleaning apparatus. By arranging the rollers 1320, the frictional resistance between the frame of the cleaning module and the wedge-shaped components 1310 can be reduced, the wear between the components can be reduced, and the service life of each component can be prolonged.

In some embodiments, a portion of the roller 1320 is embedded in the wedge-shaped component 1310, such that sliding contact between the lifting structure 1300 and the frame of the cleaning module can be smoothly transitioned to the rolling contact. In some embodiments, the roller 1320 is detachably connected to the wedge-shaped component 1310 so as to facilitate the replacement of the roller 1320.

In some embodiments, the number of lifting structures 1300 is at least two, and the at least two lifting structures 1300 are disposed opposite to each other in the second direction Y, with the second direction Y being perpendicular to the first direction X. In the process of the automatic cleaning apparatus moving backward onto the bottom plate body 1100 in the first direction X, the at least two lifting structures 1300 are respectively abutted with the frame of the cleaning module, such that the cleaning module is evenly lifted up for a certain height. By arranging two or more lifting structures 1300, the force acting on the cleaning module can be more dispersed, thereby avoiding the deflection of the cleaning module in the second direction Y due to uneven force.

In some embodiments, the number of the lifting structures 1300 is two, the two lifting structures 1300 are disposed opposite to each other in the second direction Y, and the two lifting structures 1300 are basically symmetrically disposed relative to the central axis of the bottom plate body 1100. The spacing between the two lifting structures 1300 is equivalent to or slightly greater than the width of the dust collection opening 6100 in the second direction Y, such that a main brush cover under the automatic cleaning apparatus can be prevented from being shielded.

In some embodiments, the bottom plate 1000 of the self-cleaning dust collection seat further includes a beveled body 1400, which may be a slope and disposed on the surface of the bottom plate body 1100. In some embodiments, the beveled body 1400 may be disposed on the edge of the joint between the bottom plate body 1100 and the body base 6000, and is substantially located in front of the dust collection opening 6100 and at the central axis of the bottom plate body 1100. In some embodiments, the number of the lifting structures 1300 is two, the two lifting structures are disposed opposite to each other in the second direction Y, and the beveled body 1400 is substantially located at the middle position between the two lifting structures 1300. By arranging the beveled body 1400 on the surface of the bottom plate body 1100, the front end (in particular a collision sensor disposed at the front end) of the automatic cleaning apparatus can be prevented from touching the edge of the dust collection opening 6100 when the automatic cleaning apparatus enters a station in a forward direction.

In some embodiments, the beveled body 1400 is disposed in the recessed portion 1121 of the bottom plate body 1100. In some embodiments, as shown in FIG. 13, the beveled body 1400 and the lifting structures 1300 are both disposed in the recessed portion 1121 of the bottom plate body 1100. By arranging the recessed portion 1121 at the middle position of the bottom plate body 1100, and by arranging both the beveled body 1400 and the lifting structures 1300 in the recessed portion 1121, the automatic cleaning apparatus can be prevented from being blocked by or rubbed against the surface of the bottom plate body 1100 in the process of entering and leaving a station.

In some embodiments, the lifting structure 1300 is disposed in the recessed portion 1121 of the bottom plate body 1100, and the height of the lifting structure 1300 is greater than the height of the raised portion 1122, such that the cleaning module located on the bottom surface of the automatic cleaning apparatus can be effectively pressed, to allow the cleaning module to move toward the interior of the automatic cleaning apparatus for a relatively large distance.

In some embodiments, the beveled body 1400 is disposed in the recessed portion 1121 of the bottom plate body 1100, and the height of the beveled body 1400 is substantially flush with the height of the raised portion 1122. If the height of the beveled body 1400 is too low, the automatic cleaning apparatus cannot be prevented from touching the edge of the dust collection opening 6100 when the automatic cleaning apparatus enters the station. However, if the height of the beveled body 1400 is too high, the automatic cleaning apparatus may be blocked when entering or leaving the station.

In some embodiments, there is a preset distance between the lifting structure 1300 and the terminating end of the bottom plate body 1100, and the preset distance is configured such that, when the automatic cleaning apparatus moves backward onto the bottom plate 1000 of the self-cleaning dust collection seat, the lifting structure 1300 is not in contact with the cleaning module before the driving wheels of the automatic cleaning apparatus climb on the terminating end of the bottom plate body 1100. The reason for such an arrangement lies in that, before the driving wheels of the automatic cleaning apparatus contact the anti-skid structure 1123 at the starting end, the retreat force of the automatic cleaning apparatus is relatively small, and if the lifting structure 1300 is in contact with the cleaning module (such as the mop cloth support) in this case, automatic cleaning apparatus's entering the station may be hindered. As a result, the automatic cleaning apparatus may fail to enter a station. When the driving wheels of the automatic cleaning apparatus climb on the terminating end of the bottom plate body 1100, the lifting structure 1300 may prop up the cleaning module. In this case, the automatic cleaning apparatus has already stepped on the anti-skid structure 1123, and can successfully enter or leave the station with the assistance of the anti-skid structure 1123.

The present disclosure further provides a dust collection system, including an automatic cleaning apparatus and the self-cleaning dust collection seat as defined in the foregoing embodiments.

According to the self-cleaning dust collection seat and dust collection system provided in the embodiments of the present disclosure, by arranging the lifting structure on the bottom plate body, the scratching or jamming occurring to the cleaning module in the process of the automatic cleaning apparatus entering and leaving a station can be avoided, thereby improving the success rate of the automatic cleaning apparatus in entering and leaving the station.

In the related art, a wind duct of a self-cleaning dust collection seat often has a more complex structure, which needs to occupy more physical space, resulting in a relatively bulky appearance of the self-cleaning dust collection seat. Moreover, the complex structure of the wind duct also weakens the dust collection effect to a certain extent. As a result, it is difficult to suck all garbage from a dust box into a dust collection chamber of the self-cleaning dust collection seat.

To this end, embodiments of the present disclosure provide a self-cleaning dust collection seat, in which the structure of the wind duct inside the self-cleaning dust collection seat is optimized, and the wind duct path is reduced, such that the wind duct of the self-cleaning dust collection seat is smoother and has a more compact structure, thereby improving the dust collection efficiency of an automatic cleaning apparatus.

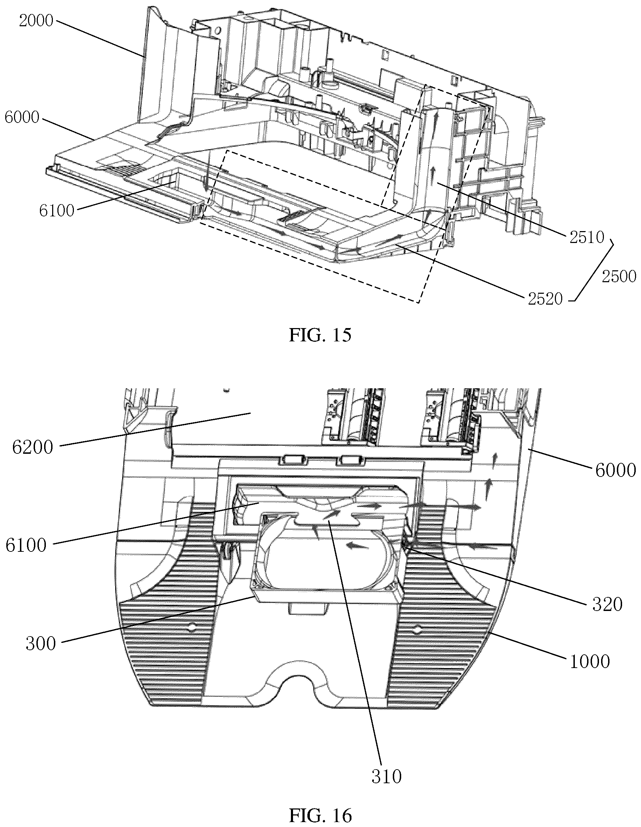

In some embodiments, the self-cleaning dust collection seat provided by the embodiments of the present disclosure is used as an example. FIG. 14 exemplarily shows a schematic diagram of an overall structure of a self-cleaning dust collection seat combined with a dust box. FIGS. 15 and 16 specifically show the structure of a wind duct of a self-cleaning dust collection seat and the travel direction of an airflow in the wind duct in a dust collection state.

As shown in FIG. 14, the self-cleaning dust collection seat provided in embodiments of the present disclosure includes a bottom plate 1000 of the self-cleaning dust collection seat and a body 2000 of the self-cleaning dust collection seat. Here, the bottom plate 1000 of the self-cleaning dust collection seat and the body 2000 of the self-cleaning dust collection seat are connected in a detachable or non-detachable manner. In some embodiments, the bottom plate 1000 of the self-cleaning dust collection seat and the body base 6000 below the body 2000 of the self-cleaning dust collection seat are connected in a detachable or non-detachable manner. The detachable connection manner can facilitate transportation and repairing.

The body 2000 of the self-cleaning dust collection seat is configured to collect garbage from a dust box of the automatic cleaning apparatus. In some embodiments, the body 2000 of the self-cleaning dust collection seat may also be provided with components such as a dust collection bin 3000, a clean water tank 4000, and a sewage tank 5000 which are disposed side by side. In some embodiments, as shown in FIG. 2, the body 2000 of the self-cleaning dust collection seat includes a water storage chamber 2700 and a dust collection chamber 2100. The water storage chamber 2700 is disposed at the top of the body 2000 of the self-cleaning dust collection seat, with an opening thereof facing upward and forward, and the water storage chamber may further include a clean water bin for accommodating the clean water tank 4000 and a sewage bin for accommodating the sewage tank 5000. The dust collection chamber 2100 and the water storage chamber 2700 are disposed side by side at the top of the body 2000 of the self-cleaning dust collection seat, with an opening of the dust collection chamber 2100 facing upward and forward, and the dust collection chamber 2100 forms a dust collection bin 3000 for accommodating a dust collection hood 2800. The upward and forward design of both the water storage chamber 2700 and the dust collection chamber 2100 facilitates the mounting and removal of the sewage tank 5000, the clean water tank 4000 and the dust collection hood 2800.

The body base 6000 is included below the body 2000 of the self-cleaning dust collection seat. In some embodiments, the body base 6000 is integrally disposed below the body 2000 of the self-cleaning dust collection seat. The body base 6000 is also abutted with the bottom plate 1000 of the self-cleaning dust collection seat. In some embodiments, the bottom plate 1000 of the self-cleaning dust collection seat and the body base 6000 are disposed in sequence in the second direction, which is a direction opposite to the arrow of the front and rear axis X.

As shown in FIG. 14, the dust collection opening 6100 is formed on the body base 6000, and is substantially located at the edge of the joint between the body base 6000 and the bottom plate 1000 of the self-cleaning dust collection seat. The dust collection opening 6100 is configured to be docked with a dust outlet of the automatic cleaning apparatus, and garbage in a dust box 300 of the automatic cleaning apparatus enters the dust collection chamber 2100 in the body 2000 of the self-cleaning dust collection seat through the dust collection opening 6100. In some embodiments, a sealing rubber gasket is further disposed around the dust collection opening 6100 for a purpose of sealing after the dust collection opening 6100 is docked with the dust outlet of the automatic cleaning apparatus, thereby preventing garbage leakage. The dust collection opening 6100 substantially extends in a first direction, which is a direction opposite to the arrow of the transverse axis Y and is substantially perpendicular to the second direction. The first direction is also the length direction of the dust collection opening 6100, and the distance over which the dust collection opening 6100 extends in the first direction may be denoted as a length Li. The dust collection opening 6100 extends in both the second direction and the first direction. The second direction is the width direction of the dust collection opening 6100, and the distance over which the dust collection opening 6100 extends in the second direction may be denoted as a width W₁. It can be understood that the following relationship exists between the length Li and the width Wi: Li> Wi.

In some embodiments, the body base 6000 further includes a washing bin 6200, which is configured to clean cleaning components on the automatic cleaning apparatus, for example, to supplement a cleaning solution to a wet cleaning module of the automatic cleaning apparatus, and/or to accommodate debris removed from the wet cleaning module, and/or to collect sewage generated in the process of cleaning the we cleaning module, thereby facilitating the subsequent treatment of the debris and sewage. In some embodiments, the washing bin 6200 is disposed behind the dust collection opening 6100. The washing bin 6200 extends in the second direction to the lower part of the body 2000 of the self-cleaning dust collection seat, and a side wall may be formed between the body 2000 of the self-cleaning dust collection seat and the washing bin 6200.

Referring to FIGS. 15 and 16, the body 2000 of the self-cleaning dust collection seat further includes a wind duct 2500. One end of the wind duct 2500 is communicated with the dust collection opening 6100 of the body base 6000, and the other end of the wind duct 2500 is communicated with the dust collection chamber 2100. When the self-cleaning dust collection seat is in the dust collection state, a sufficient negative pressure is formed in the dust collection bin 3000, and the garbage in the dust box 300 is sucked into a dust collection bag through the dust collection opening 6100 and the wind duct 2500. The wind duct 2500 may be further classified into a body wind duct 2510 and a base wind duct 2520 depending on its position. The base wind duct 2520 is substantially located at the position shown in the dashed box at the lower right corner of FIG. 15, and the body wind duct 2510 is substantially located at the position shown in the dashed box at the upper right corner of FIG. 15. In both FIGS. 15 and 16, the movement trajectories of the garbage driven by the airflow in the base wind duct 2520 and in the body wind duct 2510 are also shown with solid arrows. Details are as follows.

The base wind duct 2520 is located inside the body base 6000 and is a substantially L-shaped structure. One end of the base wind duct 2520 is communicated with the dust collection opening 6100 in the length direction, and the other end of the base wind duct is communicated with the body wind duct 2510 located on the side wall of the body 2000 of the self-cleaning dust collection seat. In some embodiments, the base wind duct 2520 is communicated with the dust collection opening 6100 in the length direction and extends in the first direction to a position that is substantially an edge of the body base 6000, and then extends to the body wind duct 2510 in the second direction. In some embodiments, the base wind duct 2520 is communicated with the dust collection opening 6100 at one end of the dust collection opening 6100 in the length direction, such that the airflow and the garbage driven thereby flow out directly from one end of the dust collection opening 6100 in the length direction and travel along an almost straight line, reducing the resistance to the airflow flowing out of the dust collection opening 6100. In some embodiments, the position of the base wind duct 2520 extending in the second direction is between the edge of the washing bin 6200 and the edge of the body base 6000, such that the limited space of the body base 6000 can be fully utilized, which reduces the overall size of a product. In some embodiments, the width of the base wind duct 2520 is slightly smaller than the width of the dust collection opening 6100, and the width of the wind duct may be the maximum value of the cross section of the wind duct. For example, when the cross section of the wind duct is circular or substantially circular, the width of the wind duct is the diameter of the circle or the length of the long axis of an ellipse. By appropriately reducing the width of the base wind duct 2520, the flow velocity of the airflow in the base wind duct 2520 can be increased, such that garbage in the dust box 300 can more easily pass through the base wind duct 2520, thereby avoiding the blockage of the base wind duct 2520 and improving the dust collection effect. In some embodiments, the base wind duct 2520 has a smoothly arc connection at the turn where the base wind duct extends in the first direction and the second direction. Although the first direction and the second direction are nearly perpendicular to each other, the base wind duct 2520 does not turn at a right angle at the turn between the first direction and the second direction, but turns along an arc that is tangent to both sides of the angle to replace an original right angle, such that the airflow passing through the base wind duct 2520 is gentler, without sudden change in the flow velocity. Similarly, smoothly arc connections may also be used at the turns when the base wind duct 2520 extends in the second direction and the body wind duct 2510 extends upwards.

The body wind duct 2510 is at least disposed on the side wall of the body 2000 of the self-cleaning dust collection seat. One end of the body wind duct 2510 is communicated with the base wind duct 2520, and the other end of the body wind duct leads to the dust collection chamber 2100. The body wind duct 2510 makes the base wind duct 2520 and the dust collection chamber 2100 be communicated with each other. In some embodiments, the body wind duct 2510 extends upward to the dust collection bin 3000 along the side wall of the body 2000 of the self-cleaning dust collection seat. Here, the side wall along which the body wind duct 2510 extends may be formed by the side edge of the washing bin 6200 and the side edge of the body 2000 of the self-cleaning dust collection seat together. The above design of the body wind duct 2510 allows the vacant space between the body 2000 of the self-cleaning dust collection seat and the washing bin 6200 to be fully used, enabling the structure to be more compact. In some embodiments, the width of the body wind duct 2510 is greater than the width of the base wind duct 2520. By appropriately adjusting the width relationship between the body wind duct 2510 and the base wind duct 2520, the flow velocity of the airflow in the base wind duct 2520 can be increased, such that the garbage in the dust box 300 can more easily pass through the base wind duct 2520, thereby avoiding the blockage of the base wind duct 2520 and improving the dust collection effect.

In some embodiments, the body wind duct 2510 and the base wind duct 2520 are two independent structures and are communicated with each other at a joint therebetween, and these discrete structures can facilitate the maintenance of the duct, in particular when the duct is blocked. In some embodiments, the body wind duct 2510 and the base wind duct 2520 are formed as an integrated structure, which can effectively avoid the leakage of airflow from the wind duct.

The present disclosure further provides a dust collection system, including an automatic cleaning apparatus and the self-cleaning dust collection seat as defined in the foregoing embodiments.

Referring to FIGS. 14 and 16, the dust box 300 included in the automatic cleaning apparatus is shown, and the dust box 300 includes a dust inlet 310 and a wind inlet 320. Here, the wind inlet 320 is disposed on the side wall of the dust box 300 facing the first extension direction of the base wind duct 2520. The dust inlet 310 is disposed on the side wall of the dust box 300 facing the body 2000 of the self-cleaning dust collection seat. The dust inlet 310 is docked with the dust outlet of the automatic cleaning apparatus.

In the dust collection state, the wind inlet 320 of the dust box 300 is opened, and a first fan in the self-cleaning dust collection seat starts to work to suck air out of the dust collection chamber 2100 and the wind duct 2500, to reduce the air pressure in the dust collection chamber 2100 and in the wind duct 2500, such that an airflow in a U-shaped channel is formed among the wind inlet 320 and the dust inlet 310 of the dust box 300, the dust outlet of the automatic cleaning apparatus, the dust collection opening 6100 of the self-cleaning dust collection seat, and the wind duct 2500. The airflow brings away the garbage in the dust box 300, and the garbage in the dust box 300 is finally sucked into the dust collection chamber 2100 under the driving of the airflow. The U-shaped channel is an optimal inflow and outflow channel for the airflow, and the design of the U-shaped channel allows for smoother airflow, making it easier to take the garbage out of the dust box and into the dust collection bin through the wind duct.

According to the self-cleaning dust collection seat and the dust collection system provided by the embodiments of the present disclosure, the structure of the wind duct inside the self-cleaning dust collection seat is optimized to reduce the wind duct path, such that the wind duct of the self-cleaning dust collection seat is smoother and has the more compact structure, which can in turn improve the dust collection efficiency of the automatic cleaning apparatus.

Finally, it should be noted that various embodiments in the specification are described in a progressive manner, each embodiment focuses on the differences from the other embodiments, and the same or similar parts among the various embodiments may refer to one another.

The above embodiments are only used to illustrate the technical solutions of the present disclosure, and are not intended to limit the present disclosure. Although the present disclosure has been described in detail with reference to the foregoing embodiments, those of ordinarily skill in the art should understand that they can still make modifications to the technical solutions described in the foregoing embodiments, or make equivalent substitutions to some of the technical features, while these modifications or substitutions do not deviate the essence of corresponding technical solutions from the spirit and scope of the technical solutions of the embodiments of the present disclosure.

## Claims

1. A self-cleaning dust collection seat, comprising:
a bottom plate of the self-cleaning dust collection seat and a body of the self-cleaning dust collection seat, wherein the bottom plate of the self-cleaning dust collection seat is connected to the body of the self-cleaning dust collection seat, a body base is comprised below the body of the self-cleaning dust collection seat, and is connected to the bottom plate, and wherein the body base and the bottom plate are, after being connected, configured to support an automatic cleaning apparatus when the automatic cleaning apparatus returns to the self-cleaning dust collection seat;
a dust collection opening substantially located at an edge of a joint between the body base and the bottom plate; and
a lifting structure disposed on an upper surface of the bottom plate and substantially located at the edge of the joint between the body base and the bottom plate, wherein the lifting structure is configured to press a cleaning module located on a bottom surface of the automatic cleaning apparatus in a process of the automatic cleaning apparatus moving backward in a first direction to the bottom plate of the self-cleaning dust collection seat, such that the cleaning module moves toward an interior of the automatic cleaning apparatus.

2. The self-cleaning dust collection seat according to claim 1, wherein the body base comprises a first upper surface with a first slope factor, the bottom plate comprises a second upper surface with a second slope factor, and the first slope factor is greater than the second slope factor.

3. The self-cleaning dust collection seat according to claim 2, wherein the lifting structure comprises:
a wedge-shaped component substantially disposed on the second upper surface and protruding from the second upper surface toward a direction away from the second upper surface, wherein the wedge-shaped component comprises a first inclined surface, a first top surface and a second inclined surface in sequence in the first direction, and the first inclined surface, the first top surface and the second inclined surface are abutted with each other in sequence in the first direction; and
a roller disposed on the first top surface, wherein the roller is configured to be in rolling contact with the cleaning module in a process of the cleaning module located on the bottom surface of the automatic cleaning apparatus being pressed to move toward the interior of the automatic cleaning apparatus.

4. The self-cleaning dust collection seat according to claim 3, wherein a first included angle between the first inclined surface and the first upper surface is smaller than a second included angle between the second inclined surface and the first upper surface.

5. The self-cleaning dust collection seat according to claim 3, wherein a portion of the roller is embedded in the wedge-shaped component, and the roller is detachably connected to the wedge-shaped component.

6. The self-cleaning dust collection seat according to claim 3, wherein a number of the lifting structure is two, the two lifting structures are disposed opposite to each other in a second direction, the second direction is perpendicular to the first direction, and a spacing between the two lifting structures in the second direction is equivalent to a width of the dust collection opening in the second direction.

7. The self-cleaning dust collection seat according to claim 6, wherein the bottom plate of the self-cleaning dust collection seat further comprises:
a beveled body disposed on the edge of the joint between the bottom plate and the body base and substantially located at a middle position between the two lifting structures, wherein the beveled body is configured to prevent the automatic cleaning apparatus from touching an edge of the dust collection opening when the automatic cleaning apparatus enters a station in a forward direction.

8. The self-cleaning dust collection seat according to claim 7, wherein the bottom plate comprises:
a recessed portion located at a center of the bottom plate and raised portions located on two sides of the recessed portion, wherein the lifting structures and the beveled body are both disposed in the recessed portion.

9. The self-cleaning dust collection seat according to claim 8, wherein a height of the lifting structure is greater than a height of each of the raised portions, and a height of the beveled body is substantially flush with the height of each of the raised portions.

10. The self-cleaning dust collection seat according to claim 8, wherein the raised portions are each provided with an anti-skid structure in the first direction, and the anti-skid structure is at least disposed on a starting end and a terminating end of the bottom plate in the first direction.

11. The self-cleaning dust collection seat according to claim 10, wherein the lifting structure has a preset distance from the starting end, and the preset distance is configured such that when the automatic cleaning apparatus enters backward the bottom plate of the self-cleaning dust collection seat, before driving wheels of the automatic cleaning apparatus climb on the starting end, the lifting structure is not in contact with the cleaning module, and after the driving wheels of the automatic cleaning apparatus climb on the starting end, the lifting structure props up the cleaning module.

12. The self-cleaning dust collection seat according to claim 1, wherein the bottom plate of the self-cleaning dust collection seat is detachably connected to the body of the self-cleaning dust collection seat.

13. A dust collection system, comprising an automatic cleaning apparatus and the self-cleaning dust collection seat according to any of claims 1 to 12.

14. A self-cleaning dust collection seat, comprising a body of the self-cleaning dust collection seat, wherein
the body of the self-cleaning dust collection seat is configured to at least partially support an automatic cleaning apparatus when the automatic cleaning apparatus returns to the self-cleaning dust collection seat; and
the self-cleaning dust collection seat further comprises:
a dust collection opening configured to be docked with a dust outlet of the automatic cleaning apparatus when the automatic cleaning apparatus returns to the self-cleaning dust collection seat for a dust collection operation; and
a lifting structure substantially located in a direction close to the dust collection opening and away from the body of the self-cleaning dust collection seat, wherein the lifting structure is configured to press a cleaning module located on a bottom surface of the automatic cleaning apparatus in a process of the automatic cleaning apparatus moving backward in a first direction to the self-cleaning dust collection seat, such that the cleaning module moves toward an interior of the automatic cleaning apparatus.

15. The self-cleaning dust collection seat according to claim 14, wherein the lifting structure comprises:
a wedge-shaped component, wherein the wedge-shaped component comprises a first inclined surface, a first top surface and a second inclined surface in sequence in the first direction, and the first inclined surface, the first top surface and the second inclined surface are abutted with each other in sequence in the first direction; and
a roller disposed on the first top surface, wherein the roller is configured to be in rolling contact with the cleaning module in a process of the cleaning module located on the bottom surface of the automatic cleaning apparatus being pressed to move toward the interior of the automatic cleaning apparatus.

16. The self-cleaning dust collection seat according to claim 15, wherein the first inclined surface has a slope factor smaller than a slope factor of the second inclined surface.

17. The self-cleaning dust collection seat according to claim 16, wherein a portion of the roller is embedded in the wedge-shaped component, and the roller is detachably connected to the wedge-shaped component.

18. The self-cleaning dust collection seat according to claim 16, wherein a number of the lifting structure is two, the two lifting structures are disposed opposite to each other in a second direction, the second direction is perpendicular to the first direction, and a spacing between the two lifting structures in the second direction is equivalent to a width of the dust collection opening in the second direction.

19. The self-cleaning dust collection seat according to claim 18, wherein the self-cleaning dust collection seat further comprises:
a beveled body substantially located at a middle position between the two lifting structures, wherein the beveled body is configured to prevent the automatic cleaning apparatus from touching an edge of the dust collection opening when the automatic cleaning apparatus enters a station in a forward direction.

20. The self-cleaning dust collection seat according to claim 14, wherein the lifting structure has a preset distance from a starting end of a bottom plate of the self-cleaning dust collection seat, and the preset distance is configured such that when the automatic cleaning apparatus enters backward the bottom plate of the self-cleaning dust collection seat, before driving wheels of the automatic cleaning apparatus climb on the starting end, the lifting structure is not in contact with the cleaning module, and after the driving wheels of the automatic cleaning apparatus climb on the starting end, the lifting structure props up the cleaning module.
